# EUROPEAN PATENT APPLICATION

(11) **EP 4 742 746 A1**
(43) Date of publication of application: **13.05.2026**
(21) Application number: 23943991.2
(22) Date of filing: 03.07.2023
(51) Int. Cl.: H04W 28/24

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN); XU, Yang, Dongguan, Guangdong 523860 (CN)
(74) Representative: Grassi, Stefano
(86) International application number: PCT/CN2023/105602
(87) International publication number: WO 2025/007257

(57) **Abstract**

Provided are a wireless communication method, a terminal device and a network device. The method comprises: a target terminal device sending a first request to a network device, wherein the first request is used to request the migration of a target service from a first terminal device to a second terminal device; and the target terminal device is the first terminal device or the second terminal device. In the embodiments of the present application, the target terminal device can send the first request to the network device to request the migration of the target service from the first terminal device to the second terminal device. That is, the introduction of the first request helps the network device to perceive the requirement for the cross-terminal-device migration of the target service so as to optimize subsequent processes on the basis of the requirement. Compared with that during conventional cross-terminal-device migration of a target service, the network device is unable to perceive the requirement for the cross-terminal-device migration of the target service, and is thus unable to optimize the subsequent processes on the basis of the requirement, an improvement in the user experience is facilitated.

## Description

### TECHNICAL FIELD

The present disclosure relates to the technical field of communications, and more particularly, to methods for wireless communication, terminal devices, and network devices.

### BACKGROUND

With the advancement of science and technology and the improvement of living standards, a user usually has multiple terminal devices. In some scenarios, users often switch between multiple terminal devices. For example, if the user runs a certain service (also referred to as a "target service") on a first terminal device and then needs to switch to a second terminal device to run the service, the user needs to terminate the operation of the target service on the first terminal device first, and then start the target service on the second terminal device. This way of switching between terminal devices will lead to an increased sense of stagnation in the target service, and degrade user experiences.

### SUMMARY

The present disclosure provides methods for wireless communication, terminal devices, and network devices. Various aspects of the present disclosure are described as follows.

In a first aspect, there is provided a method for wireless communication, including: sending, by a target terminal device, a first request to a network device, the first request being used to request migration of a target service from a first terminal device to a second terminal device, herein the target terminal device is the first terminal device or the second terminal device.

In a second aspect, there is provided a method for wireless communication, including: receiving, by network device, a first request sent by a target terminal device, the first request being used to request migration of a target service from a first terminal device to a second terminal device, herein the target terminal device is the first terminal device or the second terminal device.

In a third aspect, there is provided a method for wireless communication, including: sending, by a fifth core network device, target information to a sixth core network device, the target information being used to indicate a Quality of Service (QoS) parameter associated with a user, and the user being associated with one or more terminal devices.

In a fourth aspect, there is provided a method for wireless communication, including: receiving, by a sixth core network device, target information sent by a fifth core network device, the target information being used to indicate a Quality of Service (QoS) parameter associated with a user, and the user being associated with one or more terminal devices.

In a fifth aspect, there is provided a terminal device that is a target terminal device. The terminal device includes: a sending unit, configured to send a first request to a network device, the first request being used to request migration of a target service from a first terminal device to a second terminal device, herein the target terminal device is the first terminal device or the second terminal device.

In a second aspect, there is provided a network device, including: a receiving unit, configured to receive a first request sent by a target terminal device, the first request being used to request migration of a target service from a first terminal device to a second terminal device, herein the target terminal device is the first terminal device or the second terminal device.

In a seventh aspect, there is provided a network device, including: a sending unit, configured to send target information to a sixth core network device, the target information being used to indicate a Quality of Service (QoS) parameter associated with a user, and the user being associated with one or more terminal devices.

In an eighth aspect, there is provided a network device, including: a receiving unit, configured to receive target information sent by a fifth core network device, the target information being used to indicate a Quality of Service (QoS) parameter associated with a user, and the user being associated with one or more terminal devices.

In a ninth aspect, there is provided a terminal device, including a processor, a memory and a communication interface. The memory is configured to store one or more computer programs, and the processor is configured to invoke the computer programs in the memory to cause the terminal device to perform some or all of operations in the methods of the above aspects.

In a tenth aspect, there is provided a network device, including a processor, a memory and a transceiver. The memory is configured to store one or more computer programs, and the processor is configured to invoke the computer programs in the memory to cause the network device to perform some or all of operations in the methods of the above aspects.

In an eleventh aspect, the embodiments of the present disclosure provide a communication system including the terminal device and/or the network device above. In another possible design, the system may further include other devices that interact with the terminal device or the network device in the schemes provided by the embodiments of the present disclosure.

In a twelfth aspect, the embodiments of the present disclosure provide a computer-readable storage medium storing a computer program that causes a communication device (e.g., a terminal device or a network device) to perform some or all of the operations in the methods of the above aspects.

In a thirteenth aspect, the embodiments of the present disclosure provide a computer program product, herein the computer program product includes a non-transitory computer-readable storage medium storing a computer program operable to cause a communication device (e.g., a terminal device or a network device) to perform some or all of the operations in the methods of the above aspects. In some implementations, the computer program product may be a software installation package.

In a fourteenth aspect, the embodiments of the present disclosure provide a chip including a memory and a processor, and the processor can invoke and run a computer program from the memory to perform some or all of the operations described in the methods of the above aspects.

In the embodiments of the present disclosure, the target terminal device may send a first request to the network device to request migration of the target service from the first terminal device to the second terminal device. That is to say, the introduction of the first request helps the network device to perceive a cross-terminal device migration requirement of the target service so as to optimize the subsequent process based on the requirement. Compared with the traditional cross-terminal device migration of the target service where the network device cannot perceive the cross-terminal device migration requirement of the target service and thus cannot optimize the subsequent process based on the requirement, it helps to improve user experiences.

### BRIEF DESCRIPTION OF THE DRAWINGS

FIG. 1 shows a wireless communication system to which an embodiment of the present disclosure is applied.
FIG. 2 is a schematic diagram showing Quality of Service (QoS) flows used in an embodiment of the present disclosure.
FIG. 3 is a schematic flowchart of a method for wireless communication according to an embodiment of the present disclosure.
FIG. 4 is a schematic diagram showing Protocol Data Unit (PDU) sessions involved in a target service migration process according to an embodiment of the present disclosure.
FIG. 5 is a schematic flowchart for migrating a target service according to an embodiment of the present disclosure.
FIG. 6 is a schematic flowchart for migrating a target service according to another embodiment of the present disclosure.
FIG. 7 is a schematic flowchart for migrating a target service according to another embodiment of the present disclosure.
FIG. 8 is a schematic flowchart showing QoS parameter reporting according to an embodiment of the present disclosure.
FIG. 9 is a schematic diagram of a terminal device according to an embodiment of the present disclosure.
FIG. 10 is a schematic diagram of a network device according to an embodiment of the present disclosure.
FIG. 11 is a schematic diagram of a network device according to an embodiment of the present disclosure.
FIG. 12 is a schematic diagram of a network device according to an embodiment of the present disclosure.
FIG. 13 is a schematic structural diagram of a communication device according to an embodiment of the present disclosure.

### DETAILED DESCRIPTION

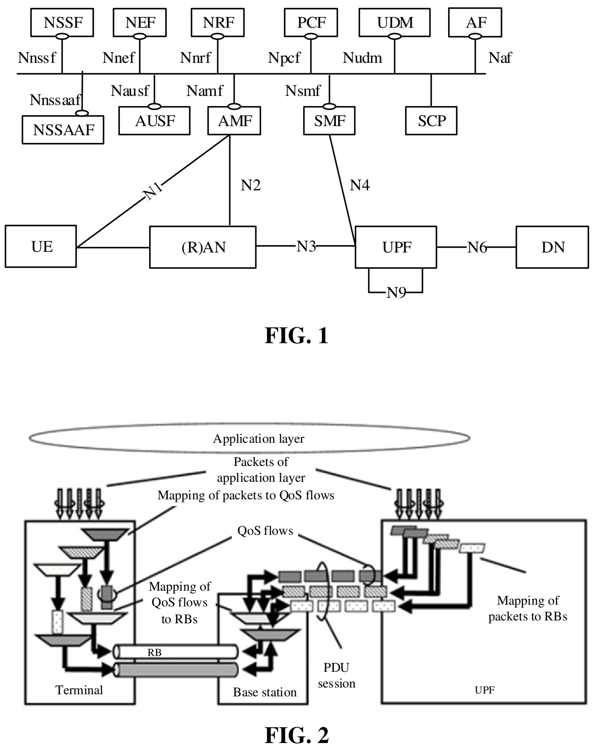

Hereinafter, technical schemes in the present disclosure will be described with reference to the accompanying drawings. In order to facilitate understanding, a schematic diagram of the architecture of a communication system according to the embodiment of the present disclosure will be described below with reference to FIG. 1. FIG. 1 is a schematic diagram showing the architecture of a communication system to which an embodiment of the present disclosure is applicable. The network architecture may include terminal devices, access network (AN) network elements, and core network elements.

It should be understood that the technical schemes of the embodiments of the present disclosure can be applied to various communication systems, such as a Fifth Generation (5G) system or a New Radio (NR) system, a Long Term Evolution (LTE) system, an LTE Frequency Division Duplex (FDD) system, an LTE Time Division Duplex (TDD), and the like. The technical schemes provided in the present disclosure can also be applied to future communication systems, such as a sixth generation mobile communication system, a satellite communication system, and the like.

The terminal device in the embodiment of the present disclosure may also be referred to as User Equipment (UE), an access terminal, a subscriber unit, a subscriber station, a Mobile Station (MS), a Mobile Terminal (MT), a remote station, a remote terminal, a mobile device, a user terminal, a terminal, a wireless core network element, a user agent, or a user device. The terminal device in the embodiment of the present disclosure may be a device that provides voice and/or data connectivity to a user, and may be used to connect people, objects, and machines, for example, a handheld device or vehicle-mounted device that has a wireless connection function, or the like. The terminal device in the embodiment of the present disclosure may be a mobile phone, a tablet computer (or Pad), a laptop, a handheld computer, a Mobile Internet Device (MID), a wearable device, a Virtual Reality (VR) device, an Augmented Reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Alternatively, the UE may be used to act as a base station. For example, a UE may act as a scheduling entity that provides sidelink signals between UEs in Vehicle-to-Everything (V2X) or Device-to-Device (D2D), etc. For example, a cellular phone and an automobile communicate with each other using sidelink signals. A cellular phone and a smart home device communicate with each other without communication signals relayed through a base station.

The access network element may be an access network device. The access network device may be an access device to which the terminal wirelessly accesses in the network architecture, and is mainly responsible for wireless resource management, Quality of Service (QoS) management, data compression and encryption on the air interface side. The access network device may also be referred to as a radio access network (RAN) device, for example, the access network device may be a base station. The base station may broadly cover, or be substituted by, various names such as a Node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a MultiStandard Radio (MSR) node, a home base station, a network controller, an access node, a wireless node, an Access Point (AP), a transmission node, a transceiver node, a Base Band Unit (BBU), a Remote Radio Unit (RRU), an Active Antenna Unit (AAU), a Remote Radio Head (RRH), a Central Unit (CU), a Distributed Unit (DU), and a positioning node. The base station may be a macro base station, a micro base station, a relay node, a donor node, or the like, or a combination thereof. The base station may also refer to a communication module, modem, or chip arranged within the aforementioned apparatus or device. The base station may be a mobile switching center, a device that assumes the function of a base station in D2D, V2X, or Machine-to-Machine (M2M) communication, a network-side device in a 6G network, a device that assumes the function of a base station in a future communication system, or the like. The base stations may support networks of the same or different access technologies. The embodiments of the present disclosure do not limit the specific technology and the specific form of devices adopted by the access network device.

The base station may be fixed or mobile. For example, a helicopter or drone may be configured to act as a mobile base station, and one or more cells may move according to the location of the mobile base station. In other examples, a helicopter or drone may be configured as a device to communicate with another base station.

In some deployments, the access network device in the embodiment of the present disclosure may refer to a CU or a DU, or the access network device includes a CU and a DU. The gNB may also include an AAU.

The types of core network elements may include a User Plane Function (UPF), an Access and mobility Management Function (AMF), a Session Management Function (SMF), a Policy Control Function (PCF), an Application Function (AF), a Data Network (DN), a Network Slice Selection Function (NSSF), an Authentication Server Function (AUSF), a Unified Data Management (UDM) function, a Network Exposure Function (NEF), a Network Repository Function (NRF), and a Network Slice-Specific Authentication and Authorization Function (NSSAAF). The UPF is mainly responsible for the transmission of user data, and other network elements can be called control plane functional network elements, which are mainly responsible for authentication, authorization, registration management, session management, mobility management and policy control to ensure the reliable and stable transmission of user data.

The UPF may be used to forward and receive data of the terminal. For example, the UPF may receive service data from a data network and transmit it to the terminal through the access network device. The UPF may also receive user data from the terminal through the access network device and forward it to the data network. The transmission resources allocated and scheduled by the UPF for the terminal are managed and controlled by the SMF. The bearer between the terminal and the UPF may include a user plane connection between the UPF and the access network device, and a channel established between the access network device and the terminal. Herein, the user plane connection is a QoS flow that can establish transmission data between the UPF and the access network device.

The AMF can be used to manage access by the terminal to a core network, such as location update of the terminal, registration to the network, access control, mobility management of the terminal, attachment and de-attachment of the terminal, and the like. The AMF may also provide storage resources of the control plane for a session of the terminal to store a session identifier, an SMF identifier associated with the session identifier and the like in the case of serving the session of the terminal.

The SMF may be used to select a user plane network element for a terminal, redirect the user plane network element for the terminal, allocate an Internet Protocol (IP) address to the terminal, establish a bearer (which may also be referred to as a session) between the terminal and the UPF, modify, release and perform QoS control of the session.

The PCF is used to provide policies, such as QoS policies, slice selection policies and the like, to the AMF and the SMF.

The AF is used to interact with the 3GPP core network element to support influences of applications on data routing, access the NEF, and interact with the PCF for policy control.

The DN may be IP Multimedia Service (IMS) networks, the Internet or that like that provide data services to users. There may be a variety of Application Servers (ASs) in the DN, providing different application services, such AS operator services, Internet access or third-party services, and the AS can implement the function of the AF.

The NSSF is used for network slice selection, and the supported functions include: selecting a network slice instance set serving the UE, determining allowed Network Slice Selection Assistance Information (NSSAI) and, if needed, a mapping to a subscribed Single-Network Slice Selection Assistance Information (S-NSSAI); determining configured NSSAI and, if needed, a mapping to a subscribed S-NSSAI; and determining a set of AMFs that may be used for UE query, or determining a list of candidate AMFs based on the configuration.

The AUSF is used to receive the request of the AMF to authenticate the terminal, request a key from the UDM, and then forward an issued key to the AMF for authentication processing.

The UDM includes functions such as the generation and storage of user subscription data, the management of authorization data, and the support of interaction with external third-party servers.

The NEF is used for capability exposure, that is to say, based on the NEF, the capabilities of the network can be output to an external network. External untrusted applications can access the internal data of the core network through the NEF to ensure the security of the network. The NEF can provide external application QoS capability exposure, event subscription, AF request distribution and other functions.

The NRF is used for registration, management and state detection of core network elements, so as to implement automatic management of core network elements. When the core network element is started, it must register with the NRF before providing services. Registration information may include, for example, a type, an address, a service list, and the like of the core network element.

In addition, for some networks (such as 5G networks), a Network Data Analytics Functions (NWDAF) has also been added to the core network. Based on the NWDAF, data can be collected from various network elements, network management systems, etc. of the core network, and big data statistics, analysis or intelligent data analysis can be performed to obtain network-side analysis or prediction data, thereby assisting each network element to more effectively control terminal device access according to data analysis results.

In some communication systems, such as 5G systems, the core network element may also be referred to as a network function (NF).

Each network element in FIG. 1 may be either a network element in a hardware device, or a software function running on dedicated hardware, or a virtualized function instantiated on a platform (e.g., a cloud platform). It should be noted that in the network architecture illustrated in the above drawing, only network elements included in the entire network architecture are illustratively described. The network elements included in the entire network architecture are not limited in the embodiments of the present disclosure.

Those skilled in the art will understand that the network architecture shown in FIG. 1 does not limit the network architecture, and when implemented, the network architecture may include more or fewer network elements than shown, or some network elements may be combined. It should be understood that the AN or RAN is expressed as (R)AN in FIG. 1.

### Quality of Service (QoS) flow

Referring to FIG. 2, the concept of QoS flow is introduced into the 5G network. After the terminal accesses the 5G network through the Uu interface, the QoS flow can be established for data transmission under the control of the SMF. The SMF provides the QoS flow configuration information of each QoS flow to the base station, specifically including bit rate requirements, delay requirements, bit error rate requirements and other information. For each QoS flow, the base station may schedule radio resources according to QoS flow configuration information received from the SMF to guarantee QoS requirements of the QoS flow. A QoS flow in the 5G network can transmit both an uplink data stream (that is to say, a data stream sent by a terminal to a peer device through the 5G network) and a downlink data stream (that is to say, a data stream sent by the peer device to the terminal through the 5G network). Herein, the peer device refers to a peer application server or a peer terminal. The delay requirements for the uplink data stream and the downlink data stream in a QoS flow are the same. If the delay requirements of the uplink data steam and the downlink data stream are different for a certain service, the uplink data steam and the downlink data stream will be transmitted through different QoS flows. The delay herein refers to a data transmission delay between the terminal and the UPF.

In a mobile communication network, in order to be able to transmit user plane data, one or more QoS flows need to be established, and different QoS flows correspond to different QoS parameters. As an important measure of communication quality, QoS parameters are usually used to indicate characteristics of QoS flows, which may include but are not limited to: 5G QoS Identifier (5QI), Address Resolution Protocol (ARP), Guaranteed Flow Bit Rate (GFBR), Maximum Flow Bit Rate (MFBR), maximum packet loss rate (UL/DL), end-to-end Packet Delay Budget (PDB), AN-PDB, Packet Error Rate (PER), priority level, averaging window, resource type, maximum data burst volume, UE-aggregate maximum bit rate (UE-AMBR) of user equipment, session-AMBR, etc.

A filter, or Service Data Flow (SDF) template, contains parameters that describe characteristics of packets, and is used to filter out specific packets so as to be bound to specific QoS flows. Herein, the most commonly used filter is an IP quintuple, that is to say, source IP address, destination IP address, source port number, destination port number, and protocol type.

User plane network elements of the network side and terminal will form a filter according to the combination of data packet characteristic parameters (see trapezoids in the terminal and parallelograms in the UPF in FIG. 2), which is used to filter the uplink or downlink data packets transmitted on the user plane that conform to the data packet characteristics, and bind them to a certain data stream.

### Cross-terminal migration scenarios of target services

At present, the types of user terminals are gradually diversified, and a same user may have multiple terminal devices. For example, one person may have multiple devices such as mobile phone, PAD, laptop, television, and smart vehicle at the same time. When users are in different living spaces, they often tend to use different terminal devices to continuously carry the same service. For example, a user uses a computer to participate in an online meeting in the office. After getting off work, he may use his mobile phone to continue to participate in the online meeting on the way to the parking lot. After starting the car, he can use the on-board intelligent system to continue to participate in the meeting, and when he returns home, he can switch the meeting services to a TV or computer. For another example, a user uses a TV to watch a TV program in the living room, and can continue to watch the program using a PAD or a mobile phone after returning to the bedroom.

### Traditional target service migration scenarios

In the conventional technology, after cross-terminal device migration of a target service is performed, a manner by which a user views the target service is as follows.

First, the user turns off the target service at a terminal device 1, and in response, a core network device releases a Protocol Data Unit (PDU) session of the target service, and the RAN releases radio resources allocated to the target service flow.

Then, a terminal device 2 uses the existing PDU session or establishes a new PDU session for transmitting the target service. At this time, the terminal device 2 or the network device needs to initiate a PDU session modification process to adjust the QoS configuration of the QoS flow for transmitting the target service, and accordingly, the RAN also needs to re-allocate new radio resources to the target service.

Obviously, it is difficult to ensure the continuity of the service and the stability of the service quality in the process of migrating the target service between different terminals. During a period from a time when the terminal device 1 is turned off to a time when the terminal device 2 is turned on and the account is logged in to start the target service, the user cannot obtain the service information, resulting in a sharp decline in the user experiences. Especially for electronic meetings, such as live competition broadcasts and other services, it is very important to ensure service continuity.

Of course, the user may also transmit the target service of the terminal device 1 to the terminal device 2 through the wireless screen projection technology. However, during this period, the communication system needs to spend double the resources to transmit the same service, and simultaneously consumes the power of multiple devices, and incurs additional network traffic charges.

The user may wait for the terminal device 2 to receive and display the service data before turning off the terminal device 1, thereby ensuring the continuity of the service. However, this manner also requires reserving time for users themselves, or consuming additional waiting time, which increases the inconvenience of users to a certain extent and affects the user experiences. In addition, when the user urgently needs to switch the workspace, or when the user needs to switch the terminal device due to some unexpected events, it is difficult for the user to reserve enough time to implement the switching. Users often need to complete seamless service migration between multiple devices in a short time.

### Support for Session and Service Continuity of UE in Traditional Scheme

The support for session and service continuity in the 5G system architecture can solve various continuity requirements of different applications/services of terminal devices. The 5G system supports three different Session and Service Continuity (SSC) modes, and an SSC mode associated with a PDU session does not change during the lifetime of the PDU session.

For an SSC mode 1, the network reserves a connection service provided to the terminal device. Regardless of the access technology used continuously by the terminal device (e.g., access type and cell) to access the network, the UPF that acts as the PDU session anchor point at the time of PDU session establishment remains unchanged. For the types of PDU sessions of IPv4, IPv6, or IPv4v6, the IP address remains unchanged.

For an SSC Mode 2, the network may release a connection service delivered to the terminal device and release a corresponding PDU session. For cases of IPv4 or IPv6 or IPv4v6 types, the release of the PDU session results in the release of the IP address allocated to the terminal device.

For an SSC Mode 3, the PDU session can provide service continuity for the terminal device, but cannot provide session continuity. Unlike the SSC Mode 1, the anchor point UPF of the service flow may change. The network instructs the terminal device to establish a new PDU session, and selects a local anchor point UPF with more optimized routing during the session establishment process. The old PDU session is released after the new PDU session has been established for a certain time. In this process, the IP address of the terminal device will change, but since the terminal device always has at least one PDU session accessing the DN at any time, the continuity of the service is guaranteed.

The above-described session and service continuity support is for a single terminal device, and cannot be used to guarantee service continuity when the same user migrates services between multiple terminals. In the traditional scheme, the design is often centered on the terminal device, and by default, one user is bound to one terminal device. With the advancement of science and technology and the improvement of living standards, a user usually has multiple terminal devices. In some scenarios, users often switch between multiple terminal devices. For example, if the user runs a certain service (also referred to as a "target service") on a first terminal device and then needs to switch to a second terminal device to run the service, the user needs to terminate the operation of the target service on the first terminal device first, and then start the target service on the second terminal device. This way of switching between terminal devices will lead to an increased sense of stagnation in the target service, and degrade user experiences.

Taking the target service being web browsing as an example, the web browsing includes services such as video on demand with caching capability. If the target service is to be migrated from the first terminal device to the second terminal device (that is to say, the service migration is performed across terminal devices), the second terminal device usually has no cache of the target service. Therefore, the user needs to wait for a long time to make the progress of the newly run target service on the second terminal device match the progress of the target service run on the first terminal device, resulting in poor user experiences.

Taking the target service including the live broadcast service as an example, the live broadcast service usually requires strong real-time performance. If the user first terminates the target service on the first terminal device according to the scheme introduced above and then runs the target service on the second terminal device, the user will lose a lot of key information of the live broadcast service during the above-mentioned cross-terminal device migration process, resulting in poor user experiences.

Of course, in order to improve the user experiences, avoid the user waiting for a long time or avoid the user losing a lot of key information related to the service, when the user needs to switch the target service from the first terminal device to the second terminal device, the user may first start the target service on the second terminal device, and wait until the second terminal device is ready (for example, when the second terminal device starts playing live broadcast content, or when the progress of the target service in the second terminal device is consistent with the progress of the target service in the first terminal device), the user may turn off the target service running on the first terminal device. However, such a scheme of service migration across terminal devices may lead to a substantial increase in network resources for transmitting target service.

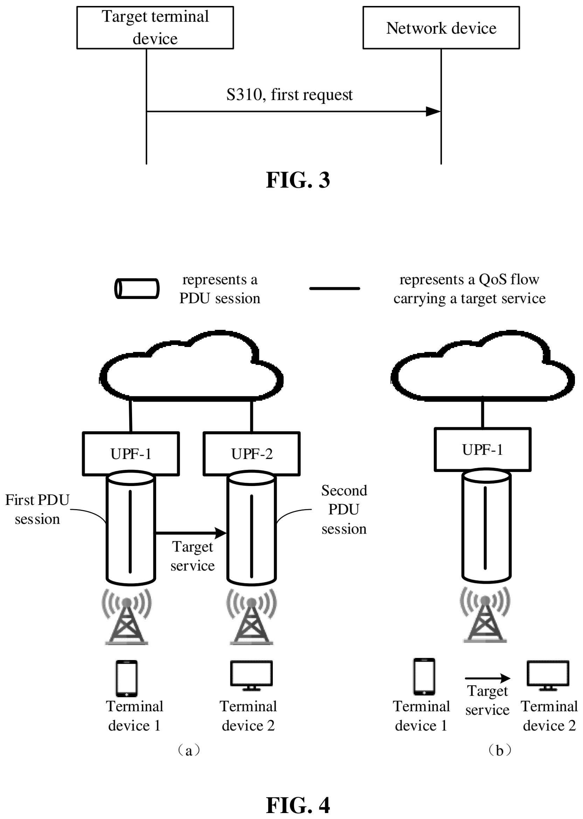

The applicant believes that the above-described problems arise because the communication system does not take into account the user's demand for migrating the target service across terminal devices, resulting in various problems in the process of migrating the target service from the first terminal device to the second terminal device by the user. Therefore, in view of the above problems, an embodiment of the present disclosure provides a method for wireless communication. In order to facilitate understanding, the method for wireless communication according to the embodiment of the present disclosure will be described below with reference to FIG. 3. FIG. 4 is a schematic flowchart of a method for wireless communication according to an embodiment of the present disclosure. The method shown in FIG. 3 includes an operation S310.

In the operation S310, a target terminal device sends a first request to a network device.

In some implementations, the first request is used to request migration of the target service from a first terminal device to a second terminal device, and therefore, in the example of the present disclosure, the first request is also referred to as a "migration request".

In the embodiment of the present disclosure, the manner by which the first request indicates the target service is not limited. In some implementations, the first request may carry indication information of the target service, and the indication information of the target service may include one or more of: an identifier of the first terminal device, an identifier of the second terminal device, a Data Network Name (DNN), a PDU session Identifier (ID), and S-NSSAI indicating the target service. A PDU session indicated by the PDU session ID may be a PDU session for transmitting the target service.

In some scenarios, the communication system does not perceive with the granularity of services, or the minimum granularity that the communication system perceives is a QoS flow. Therefore, in the example of the present disclosure, the migration of the target service can be understood as migrating the QoS flow that transmits the target service. Accordingly, the first request is used to request migration of the first QoS flow from the first terminal device to the second terminal device, and the first QoS flow may be a certain QoS flow in the first terminal device, or the first QoS flow may be used to transmit a target service.

The QoS flow(s) for transmitting the target service is/are part or all of QoS flows in an associated PDU session. That is to say, the QoS flow(s) of the PDU session may be migrated as a whole, or part of the QoS flow(s) of the PDU session may be migrated as a whole.

For example, assuming that all the QoS flows included in the PDU session are used for transmitting audio and video services, all the QoS flows included in the PDU session may be migrated to the second terminal device accordingly.

For another example, assuming that multiple QoS flows included in the PDU session are used for audio service and video service, at this time, the QoS flow for transmitting video service may be migrated from the first terminal device to the second terminal device, and accordingly, the QoS flow for transmitting audio service may be reserved in the first terminal device (for example, a headset).

As described above, the target service is carried in a PDU session, and if the target service is migrated from the first terminal device to the second terminal device, the second terminal device needs to have a PDU session (for example, a second PDU session) that can be used for transmitting the target service. In some implementations, the second PDU session may be different from the PDU session (e.g., the first PDU session) used by the first terminal device for transmitting the target service. For example, the second PDU session may be re-established by the second terminal device. For another example, the second PDU session may be obtained by modifying an existing PDU session of the second terminal device.

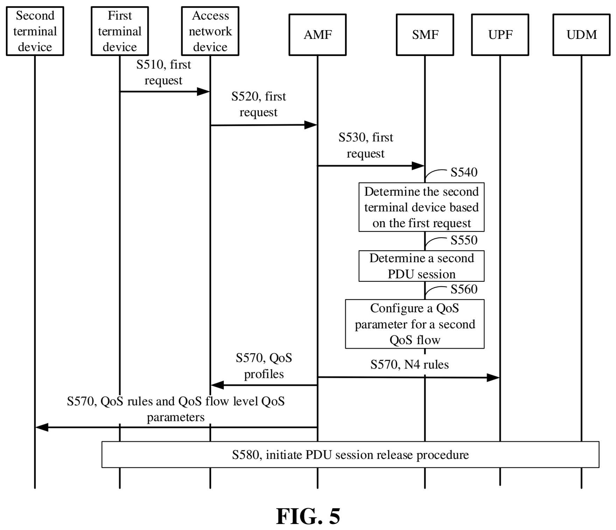

Referring to FIG. 4(a), after the target service is migrated from the first terminal device to the second terminal device, the second PDU session for transmitting the target service on the second terminal device is different from the first PDU session. Detailed description will be made below with reference to FIG. 5 to FIG. 6, and will not be repeated here for the sake of brevity.

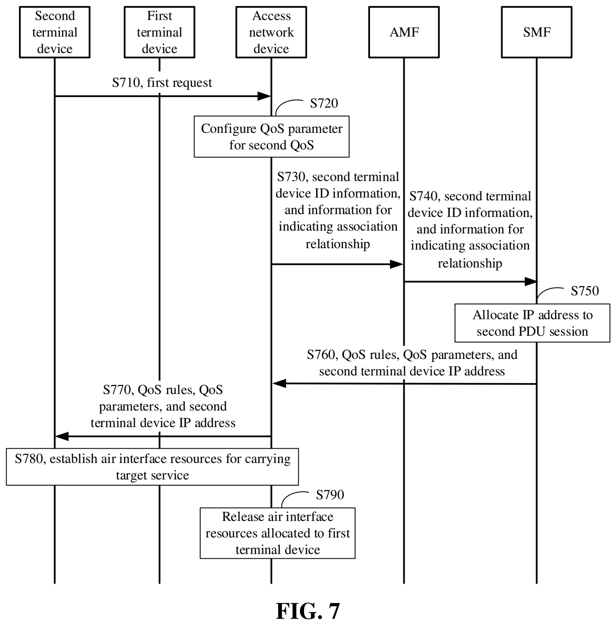

In other implementations, the second PDU session may be the same as the first PDU session used by the first terminal device for transmitting the target service. Referring to FIG. 4(b), after the target service is migrated from the first terminal device to the second terminal device, the second PDU session for transmitting the target service on the second terminal device is the same as the first PDU session. Detailed description will be made below with reference to FIG. 7, and will not be repeated here for the sake of brevity.

It is noted that, in the embodiment of the present disclosure, the second PDU session may be the PDU session for carrying the target service described above, or in other words, may be the PDU session for carrying the target service in the second terminal device. Of course, in the embodiment of the present disclosure, the second PDU session may be a PDU session of the second terminal device, for example, the second PDU session may be a specific PDU session of the second terminal device.

Further, in the embodiment of the present disclosure, the first PDU session may be the PDU session for carrying the target service described above, or in other words, may be the PDU session for carrying the target service in the first terminal device. Of course, in the embodiment of the present disclosure, the first PDU session may be a PDU session of the first terminal device, for example, the first PDU session may be a specific PDU session of the first terminal device.

In some implementations, the first terminal device and the second terminal device may have an association relationship. Taking the association relationship being association through a user as an example, the first terminal device and the second terminal device may belong to a same user. Taking the association relationship being association through a terminal group as an example, the first terminal device and the second terminal device may belong to a same terminal group. Of course, in the embodiment of the present disclosure, the first terminal device and the second terminal device may be only two terminal devices involved in the migration process of the target service, which is not limited in the embodiments of the present disclosure.

Taking the association relationship being association through a user as an example, the association relationship between the terminal device (including the first terminal device and/or the second terminal device) and the user may be dynamic, static, or semi-static.

Taking the association relationship being dynamic as an example, for some common terminal devices, the associated users may be different in different time periods. Therefore, in such a scenario, the association relationship between the terminal device and the user may be dynamic. Taking the association relationship being static as an example, for some private terminal devices, the associated user may be the same in different time periods. Therefore, in such a scenario, the association relationship between the terminal device and the user may be static. Taking the association relationship being semi-static as an example, for some terminal devices shared within the family (such as smart TV, smart car, etc.), their associated users change within the set of multiple users in different time periods. Therefore, in such a scenario, the association relationship between the terminal device and the user may be semi-static.

In some implementations, the target terminal device is a first terminal device and/or a second terminal device. That is to say, the first request may be triggered by the first terminal device and/or the second terminal device, which is not limited in the embodiments of the present disclosure. For ease of understanding, description will be made by taking the first migration request being sent by the first terminal device or the second terminal device as examples in a first embodiment and a second embodiment respectively.

**In the first embodiment, the target terminal device is a first terminal device.**

In some implementations, the first request may include one or more of: information for indicating the first terminal device; information for indicating the second terminal device; information for determining a second Protocol Data Unit (PDU) session; information for indicating an association relationship between the first terminal device and the second terminal device; information for indicating a first PDU session; information for indicating a first QoS flow; and a QoS parameter of a QoS flow for transmitting the target service.

Taking the first request including the information for indicating the first terminal device as an example, the information for indicating the first terminal device includes an identifier of the first terminal device and/or address information of the first terminal device. Herein, the address information of the first terminal device may be, for example, an IP address of the first terminal device, and of course, in the embodiment of the present disclosure, the address information of the first terminal device may be, for example, a Media Access Control (MAC) address of the first terminal device.

Taking the first request including the information for indicating the second terminal device as an example, the information for indicating the second terminal device includes an identifier of the second terminal device and/or address information of the second terminal device. Herein, the address information of the second terminal device may be, for example, an IP address of the second terminal device, and of course, in the embodiment of the present disclosure, the address information of the second terminal device may be, for example, an MAC address of the second terminal device.

Taking the first request including the information for indicating the association relationship as an example, it can be seen from the above description that in some implementations, the association relationship may refer to association through a user of terminal devices, and at this time, the information for indicating the association relationship may include indication information of a common user to which the first terminal device and the second terminal device belong (for example, the indication information may be a user identifier).

In some other implementations, the association relationship may refer to association through a terminal group of terminal devices, and at this time, the information for indicating the association relationship may include indication information of a terminal group to which the first terminal device and the second terminal device belong (for example, the indication information may be an identifier of the terminal group).

In some other implementations, the association relationship may directly include an association relationship between terminal devices, and at this time, the information for indicating the association relationship may include identification information of the association relationship between the first terminal device and the second terminal device.

For example, the first request includes information for indicating a first PDU session, herein the first PDU session is a PDU session carrying a target service of the first terminal device, or the first PDU session is a PDU session of the first terminal device. Accordingly, the information for indicating a first PDU session may include, for example, an ID of the first PDU session. In an embodiment of the present disclosure, the information for indicating a first PDU session may be included in the first request, which is helpful for the network device to determine the PDU session in which the target service to be migrated is located.

For example, the first request includes information for indicating a second PDU session, herein the second PDU session is a PDU session carrying a target service of the second terminal device, or the second PDU session is a PDU session of the second terminal device. Accordingly, the information for indicating a second PDU session may include, for example, an identifier of the second PDU session. Of course, in the embodiment of the present disclosure, the above-described information for indicating a second PDU session may further include other information, for example, the information for indicating a second PDU session may further include information of the second terminal device and application service description information associated with the target service to assist the network device (e.g., SMF) in determining the second PDU. The information of the second terminal may include identification information of the second terminal device and/or address information of the second terminal device. The application service description information may include one or more of an application identifier, a DNN, and S-NSSAI.

In the embodiment of the present disclosure, by including information for indicating a second PDU session in the first request, it is helpful for the network device to determine the second PDU session.

For example, the first request includes information for indicating a first QoS flow, the first QoS flow is used by the first terminal device for transmitting a target service, or the first QoS flow is a QoS flow of the first terminal device. The embodiment of the present disclosure does not limit the information used to indicate the first QoS flow, and in some implementations, the information used to indicate the first QoS flow may include an identifier of the first QoS flow. In some other implementations, the information for indicating a first QoS flow may include flow description information of the first QoS flow, herein the flow description information may include, for example, one or more of a source address of the first QoS flow, a destination address of the first QoS flow, a source port number of the first QoS flow, a destination port number of the first QoS flow, and a protocol identifier associated with the first QoS flow.

It is to be noted that the first QoS flow may be one QoS flow or a plurality of QoS flows, and accordingly, the information for indicating a first QoS flow may include information for indicating one QoS flow or information for indicating a plurality of QoS flows. The embodiments of the present disclosure are not limited thereto. For example, the above-described information for indicating a first QoS flow may include identifiers of one or more QoS flows.

In the embodiment of the present disclosure, the information for indicating a first QoS flow is helpful for the network device to determine the QoS flow in which the target service to be migrated is located. Of course, in some cases, the first request may not carry this information, for example, the first terminal device has only one QoS flow. For another example, all QoS flows in the PDU session in which the QoS flow is located may be migrated to the second terminal device.

Taking the first request including a QoS parameter of a QoS flow for transmitting a target service as an example, the QoS parameter may be associated with the second terminal device in some implementations. For example, the QoS parameter may be acquired by a subscription message of the second terminal device. In some other implementations, the QoS parameter may be associated with a user to which the first terminal device and the second terminal device belong. For example, the QoS parameter may be obtained through a subscription message of the user. Detailed description will be made below based on a specific embodiment, and will not be repeated here for the sake of brevity.

In an embodiment of the present disclosure, the first request may not include the QoS parameter of the QoS flow for transmitting the target service, and at this time, after the QoS flow corresponding to the target service is migrated to the second PDU session, the QoS parameter of the QoS flow may be QoS parameter(s) of other QoS flow(s) in the second PDU session. Of course, when the first request includes the first QoS parameter, the QoS parameter of the QoS flow may be determined based on the QoS of the first QoS flow, which is not limited in the embodiments of the present disclosure.

In the embodiment of the present disclosure, since the first request may be sent by the first terminal device, the information carried in the first request may be related to the information of the first terminal device. For example, the first request carries the QoS parameter of the first QoS flow. For another example, the first request carries information related to the first PDU session.

**In the second embodiment, the target terminal device is a second terminal device.**

In some implementations, the first request may include one or more of: information for indicating a first terminal device; information for indicating a second terminal device; information for indicating an association relationship between the first terminal device and the second terminal device; information for determining a second PDU session; information for determining a first PDU session; and information for determining the first QoS flow and resolution information of the second terminal device.

Taking the first request including the information for indicating the first terminal device as an example, the information for indicating the first terminal device includes an identifier of the first terminal device and/or address information of the first terminal device. Herein, the address information of the first terminal device may be, for example, an IP address of the first terminal device, and of course, in the embodiment of the present disclosure, the address information of the first terminal device may be, for example, a Media Access Control (MAC) address of the first terminal device.

Taking the first request including the information for indicating the second terminal device as an example, the information for indicating the second terminal device includes an identifier of the second terminal device and/or address information of the second terminal device. Herein, the address information of the second terminal device may be, for example, an IP address of the second terminal device, and of course, in the embodiment of the present disclosure, the address information of the second terminal device may be, for example, an MAC address of the second terminal device.

Taking the first request including the information for indicating the association relationship as an example, it can be seen from the above description that in some implementations, the association relationship may refer to association through a user of terminal devices, and at this time, the information for indicating the association relationship may include indication information of a common user to which the first terminal device and the second terminal device belong (for example, the indication information may be a user identifier).

In some other implementations, the association relationship may refer to association through a terminal group of terminal devices, and at this time, the information for indicating the association relationship may include indication information of a terminal group to which the first terminal device and the second terminal device belong (for example, the indication information may be an identifier of the terminal group).

In some other implementations, the association relationship may directly include an association relationship between terminal devices, and at this time, the information for indicating the association relationship may include identification information of the association relationship between the first terminal device and the second terminal device.

For example, the first request includes information for indicating a second PDU session, herein the second PDU session is a PDU session carrying a target service of the second terminal device, or the second PDU session may be a PDU session of the second terminal device. Accordingly, the information for indicating a second PDU session may include, for example, an identifier of the second PDU session. In an embodiment of the present disclosure, the information for indicating a second PDU session may be included in the first request, which is helpful for the network device to determine the PDU session in which the target service to be migrated is located.

For example, the first request includes information for determining a first PDU session, herein the first PDU session is a PDU session carrying a target service of the first terminal device, or the first PDU session may be a PDU session of the first terminal device. Accordingly, the information for determining a first PDU session may include, for example, application service description information associated with the target service to assist the network device (e.g., SMF) in determining the first PDU. The application service description information may include one or more of an application identifier, a DNN, and S-NSSAI.

In the embodiment of the present disclosure, by including information for determining a first PDU session in the first request, it is helpful for the network device to determine the first PDU session.

For example, the first request includes information for determining a first QoS flow, the first QoS flow is used by the first terminal device for transmitting a target service, or the first QoS flow is a QoS flow of the first terminal device. In some implementations, the information for determining a first QoS flow may include packet filters. In an embodiment of the present disclosure, the first request may assist the network device in determining the first QoS flow by carrying information for determining the first QoS flow, which facilitates the network device in determining the QoS flow to be migrated.

For example, the first request includes resolution information of the second terminal device, and the resolution information of the second terminal device may also be referred to as resolution size information of the second terminal device. In some implementations, the resolution of the second terminal device may be used to determine a QoS parameter of a second QoS flow for transmitting the target service by the second terminal device. For example, the network device may store association relationships between a plurality of resolutions and QoS parameters, and accordingly, after receiving the first request, the network device may determine a QoS parameter associated with the resolution information of the second terminal device based on the resolution information of the second terminal device and the association relationships between the plurality of resolutions and the QoS parameters.

As described above, in the embodiment of the present disclosure, it needs to migrate the target service from the first terminal device to the second terminal device, but in the process of migrating the target service, the QoS parameter of the QoS flow for transmitting the target service may change, resulting in the mismatch of QoS parameters of QoS flows corresponding to the target service before and after migration. Thus, the transmission performance of the target service is affected, thereby degrading the user experiences.

Therefore, in order to avoid the above problems, the QoS parameter of the first QoS flow is the same as the QoS parameter of the second QoS flow, or a QoS configuration of the first QoS flow is the same as a QoS configuration of the second QoS flow.

The relationship between the QoS parameter of the first QoS flow and the QoS parameter of the second QoS flow in the embodiment of the present disclosure has been described above, and the configuration method of the QoS parameter of the second QoS flow in the embodiment of the present disclosure is described below.

In some implementations, the network device (e.g., a second core network device) may configure appropriate QoS parameter(s) for the second QoS flow to transmit the target service. That is to say, if the network device is the second core network device, the method further includes: the second core network device configures the QoS parameter for the second QoS flow of the second terminal device. Hereinafter, a method for configuring a QoS parameter in the embodiment of the present disclosure will be described based on a manner 1 to a manner 6.

In the manner 1, the QoS parameter of the QoS flow for transmitting the target service may be acquired by the subscription information, that is to say, the method further includes: the second core network device acquires the subscription information in which the QoS parameter for transmitting the QoS flow of the target service is recorded. The operation that the second core network device configures the QoS parameter for the second QoS flow of the second terminal device includes: the second core network device configures the QoS parameter for the second QoS flow based on the subscription information.

In some implementations, the subscription information may be subscription information of the second terminal device, and accordingly, the QoS parameter in the subscription information is related to the second terminal device, and at this time, the second core network device may configure the QoS parameter for the second QoS flow based on the QoS parameter associated with the second terminal device.

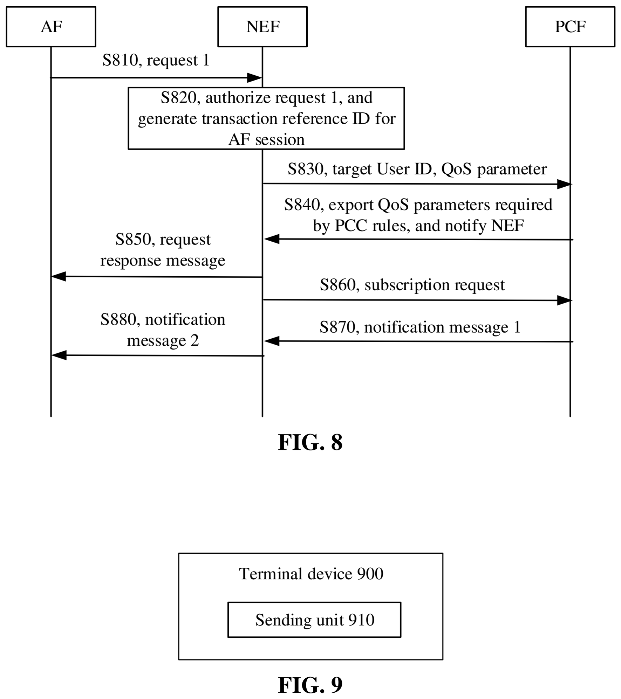

It should be noted that the subscription message may be provided by the second terminal device or by the AF, which is not limited in the embodiments of the present disclosure. The AF may provide the QoS parameter, for example, through an AF session request establishment procedure. Description will be made below with reference to FIG. 8, and will not be repeated here for the sake of brevity.

In the embodiment of the present disclosure, configuring the QoS parameter for the second QoS flow based on the QoS parameter associated with the second terminal device can be understood as directly using the QoS parameter associated with the second terminal device as the QoS parameter of the second QoS flow. Of course, in the embodiment of the present disclosure, configuring the QoS parameter for the second QoS flow based on the QoS parameter associated with the second terminal device can be understood as adjusting the QoS parameter associated with the second terminal device to obtain an adjusted QoS parameter, and configuring the second QoS flow based on the adjusted QoS parameter.

In some other implementations, the subscription information may be subscription information of a user, herein the user may be a user to which the first terminal device and the second terminal device belong, or the user may be a common user (also referred to as a target user) to which the first terminal device and the second terminal device belong. Accordingly, the QoS parameter in the subscription information is related to the user, and at this time, the second core network device may configure the QoS parameter for the second QoS flow based on the QoS parameter associated with the user.

It should be noted that, in the embodiment of the present disclosure, configuring the QoS parameter for the second QoS flow based on the QoS parameter associated with the user can be understood as directly using the QoS parameter associated with the user as the QoS parameter of the second QoS flow. Of course, in the embodiment of the present disclosure, configuring the QoS parameter for the second QoS flow based on the QoS parameter associated with the user can be understood as adjusting the QoS parameter associated with the user to obtain an adjusted QoS parameter, and configuring the second QoS flow based on the adjusted QoS parameter.

In the manner 2, if the first request carries the QoS parameter of the QoS flow for transmitting the target service, the operation that the second core network device configures the QoS parameter for the second QoS flow of the second terminal device includes: the second core network device configures the QoS parameter for the second QoS flow based on the first request. Or, in other words, the second core network device configures the QoS parameter for the second QoS flow based on the QoS parameter carried in the first request.

It should be noted that, in the embodiment of the present disclosure, configuring the QoS parameter for the second QoS flow based on the QoS parameter carried in the first request can be understood as directly using the QoS parameter carried in the first request as the QoS parameter of the second QoS flow. That is to say, the second QoS flow is configured with the QoS parameter specified in the first request. Of course, in the embodiment of the present disclosure, configuring the QoS parameter for the second QoS flow based on the QoS parameter carried in the first request can be understood as adjusting the QoS parameter carried in the first request to obtain an adjusted QoS parameter, and configuring the second QoS flow based on the adjusted QoS parameter.

In the manner 3, the second core network device may configure the second QoS flow with the same QoS parameter as a migrated QoS flow (the first QoS flow). That is to say, the operation that the second core network device configures the QoS parameter for the second QoS flow of the second terminal device includes: the second core network device acquires a first QoS parameter, the first QoS parameter being a QoS parameter used by the first terminal device for transmitting the first QoS flow of the target service; and the second core network device configures the QoS parameter for the second QoS flow of the second terminal device based on the first QoS parameter.

It should be noted that, in the embodiment of the present disclosure, configuring the QoS parameter for the second QoS flow based on the first QoS parameter can be understood as directly using the first QoS parameter as the QoS parameter of the second QoS flow. That is to say, the first QoS parameter is configured for the second QoS flow. Of course, in the embodiment of the present disclosure, configuring the QoS parameter for the second QoS flow based on the first QoS parameter can be understood as adjusting the first QoS parameter to obtain an adjusted QoS parameter, and configuring the second QoS flow based on the adjusted QoS parameter.

In the manner 4, if the first request includes information for indicating the first terminal device and information for indicating the second terminal device, or if the first request only includes information for indicating the first terminal device and information for indicating the second terminal device, the method further includes: the second core network device determines, based on the information for indicating the first terminal device, the first QoS flow of the first terminal device; and the second core network device determines a QoS parameter of the first QoS flow. The operation that the the second core network device configures the QoS parameter for the second QoS flow of the second terminal device includes: the second core network device configures the QoS parameter for the second QoS flow based on the QoS parameter of the first QoS flow.

In some implementations, the information for indicating a first terminal device may include a user identifier of a user to which the first terminal device belongs, and accordingly, the second core network device may determine the first QoS flow for transmitting the target service in the first terminal device based on the user identifier and the QFI.

Of course, the manner of determining the first QoS flow is not limited in the embodiment of the present disclosure,. For example, the first QoS flow may also be determined based on other information. In some implementations, the second core network device may determine the first QoS flow based on IP quintuple information of the first QoS flow, and then the second core network device determines the QoS parameter of the first QoS flow;. The operation that the second core network device configures the QoS parameter for the second QoS flow of the second terminal device includes: the second core network device configures the QoS parameter for the second QoS flow based on the QoS parameter of the first QoS flow. Herein, the IP quintuple information includes a source address, a destination address, a source port, a destination port and a protocol identifier of the target service flow.

It should be noted that, in the embodiment of the present disclosure, configuring the QoS parameter for the second QoS flow based on the QoS parameter of the first QoS flow can be understood as directly using the QoS parameter of the first QoS flow as the QoS parameter of the second QoS flow. That is to say, the QoS parameter of the first QoS flow is configured for the second QoS flow. Of course, in the embodiment of the present disclosure, configuring the QoS parameter for the second QoS flow based on the QoS parameter of the first QoS flow can be understood as adjusting the QoS parameter of the first QoS flow to obtain an adjusted QoS parameter, and configuring the second QoS flow based on the adjusted QoS parameter.

In the manner 5, if the first request includes information for indicating an association relationship between the first terminal device and the second terminal device, the method further includes: the second core network device determines a QoS parameter corresponding to the association relationship based on the association relationship. The operation that the second core network device configures the QoS parameter for the second QoS flow of the second terminal device includes: the second core network device configure the QoS parameter for the second QoS flow of the second terminal device based on the QoS parameter corresponding to the association relationship.

In some implementations, the association relationship may include that the first terminal device and the second terminal device belong to a same user, and at this time, the QoS parameter corresponding to the association relationship may be understood as a QoS parameter associated with the user. In some other implementations, the association relationship may include that the first terminal device and the second terminal device belong to a same terminal group, and at this time, the QoS parameter corresponding to the association relationship may be understood as a QoS parameter associated with the terminal group. In some other implementations, the association relationship may be an association relationship to which the first terminal device and the second terminal device belong, and at this time, the QoS parameter corresponding to the association relationship may be understood as a QoS parameter associated with the association relationship.

In the manner 6, if the first request includes resolution information of the second terminal device, the second core network device may determine a QoS parameter corresponding to the resolution information of the second terminal device based on the resolution information of the second terminal device and correspondence relationships between the pre-stored resolution information and the QoS parameter. Accordingly, the operation that the second core network device configures the QoS parameter for the second QoS flow of the second terminal device includes: the second core network device configures the QoS parameter for the second QoS flow of the second terminal device based on the QoS parameter corresponding to the resolution information of the second terminal device.

In the embodiment of the present disclosure, the second core network device may be, for example, an SMF. Of course, in the embodiment of the present disclosure, the second core network device may be another network element having a QoS parameter configuration function. Taking the second core network device being an SMF as an example, based on a known communication system architecture, the first request may be forwarded to the second core network device through another network device. For example, the target terminal device may send the first request to the access network device, and the access network device may forward the first request to the AMF, and then the AMF may forward the first request to the SMF.

It is to be noted that in the process of transmitting the first request, each intermediate node (the access network device, the AMF, or the like) may process the first request, or each intermediate node may directly forward the first request, which is not limited in the embodiments of the present disclosure.

In some scenarios, the second core network device further needs to configure a packet detection rule for a third core network device (e.g., UPF) in order to map a packet of the target service into a QoS flow between the second terminal device and the third core network device. In some implementations, the method further includes: the second network device configures, for the third core network device, an N4 rule corresponding to a second QoS flow and/or a QoS rule corresponding to the second QoS flow.

In some implementations, the third core network device and the second core network device may communicate through an N4 interface. Accordingly, the N4 rule may be understood as a rule related to N4 interface communication. For example, the N4 rule may include one or more of a Packet Detection Rule (PDR), a Forwarding Action Rule (FAR), a QoS Enforcement Rule (QER), and a Usage Reporting Rule (URR).

In the embodiment of the present disclosure, the information sent by the second core network device to the third core network device is not limited. For example, the second core network device may also send an N4 session identifier (N4 session ID) and/or an identification information of a QoS flow (e.g., second QoS flow) for transmitting the target service to the third core network device.

In the embodiment of the present disclosure, the N4 rule corresponding to the second QoS flow and/or the QoS rule corresponding to the second QoS flow may be carried in a PDU session modification request, and the PDU session modification request is used to request modification of the PDU session for transmitting the target service.

In some scenarios, the second core network device further needs to configure a packet detection rule for a third core network device (e.g., UPF) in order to map a packet of the target service into a QoS flow between the second terminal device and the third core network device. In some implementations, the method further includes: the second network device configures, for the third core network device, an N4 rule corresponding to a second QoS flow and/or a QoS rule corresponding to the second QoS flow. Of course, in the embodiment of the present disclosure, the information transmitted between the second core network device and the third core network device may be separately transmitted information.

In order to facilitate transmission of the data packet corresponding to the migrated target service between the second terminal device and the access network device of the second terminal device, in some implementations, the second core network device may send QoS configuration of the second QoS flow and/or alternative QoS configuration of the second QoS flow to the access network device.

The embodiment of the present disclosure does not limit contents of the QoS configuration. For example, the QoS configuration may include QoS parameters such as 5QI, ARP, Reflective QoS Attribute (RQA), GFBR, and MFBR.

It is to be noted that the second core network device may further send information for indicating the second QoS flow to the access network device, in addition to the above-described information sent to the access network device. For example, the second core network device may send identification information of the second QoS flow to the access network device.

Furthermore, in the embodiment of the present disclosure, the QoS configuration of the second QoS flow and/or the alternative QoS configuration of the second QoS flow may be carried in a PDU session modification request, and the PDU session modification request is used to request modification of the PDU session for transmitting the target service.

In other implementations, in order to facilitate the transmission of data corresponding to the migrated target service between the second terminal device and the access network device, the method further includes: the second core network device configures the QoS rule of the second QoS flow and/or QoS parameter(s) of the QoS flow level for the second terminal device.

It is to be noted that the second core network device may further send an identifier of the second QoS flow to the second terminal, in addition to the above-described information sent to the second terminal device.

Furthermore, in the embodiment of the present disclosure, the QoS configuration of the second QoS flow and/or the alternative QoS configuration of the second QoS flow may be carried in a PDU session modification request, and the PDU session modification request is used to request modification of the PDU session for transmitting the target service. Accordingly, in some implementations, the second terminal device may return a PDU session modification acknowledgement message to the second core network device. Taking the second core network device being the SMF as an example, the second terminal device may send the PDU session modification acknowledgement message to the AMF through the RAN, and accordingly, the AMF may send the received PDU session modification acknowledgement message to the SMF.

As described above, in some scenarios, the above information may be carried in the PDU session modification request, or in other words, the above information may be transmitted during the PDU session modification process. Therefore, it can be understood that the above scheme can be applied to a scenario in which the second terminal device has established a PDU session (also referred to as the second PDU session), and at this time, the second PDU session can be modified based on the PDU session modification process so that the second PDU session can be used to transmit the target service. Accordingly, in the above case, the first request may be carried in the PDU session modification request, and the PDU session modification request is used for requesting modification of the PDU session of the second terminal device, so as to transmit the target service.

Of course, in the embodiment of the present disclosure, a new PDU session (also referred to as a "second PDU session") may be established for the second terminal device to transmit the target service. In this case, the first request may be carried in a PDU session establishment request. Of course, in this case, the first request may also be transmitted independently.

In some implementations, the second core network device may allocate address information to the newly established second PDU session, that is to say, in some implementations, the method further includes: the second core network device allocates address information to the second PDU session. Herein, the address information may be, for example, IP address information or MAC address information.

In some implementations, if the first terminal device and the second terminal device belong to a same user, the address information of the second PDU session may be one of a set of addresses corresponding to the user. Of course, in the embodiment of the present disclosure, the address information of the second PDU session may be unrelated to the user.

In the embodiment of the present disclosure, the set of addresses above is not limited. Taking the address information being an IP address as an example, accordingly, the set of addresses may include one or more of: an address segment in the form of IPv4 addresses and subnet masks, an address segment in the form of IPv6 addresses and prefixes, and multiple discrete IP addresses.

In addition, in an embodiment of the present disclosure, the set of addresses may be pre-configured in a core network device (for example, a second core network device and/or a third core network device). Taking the set of addresses being stored in the second core network device as an example, the second core network device may configure address information for the second PDU session based on the pre-stored set of addresses. Of course, in the embodiment of the present disclosure, the set of addresses may also be stored in the UDM as a user subscription message, and accordingly, the second core network device may obtain the set of addresses from the UDM through the user subscription message.

In some implementations, the method further includes: the second core network device sends a second request to a fourth core network device, and the second request is used to request transmission of a PCC rule of the target service. The second core network device receives a response message for the second request sent by the fourth core network device, and the response message carries the PCC rule.

In some implementations, the second request carries information for indicating the second terminal device and/or address information of the second PDU session.

In the embodiment of the present disclosure, the fourth core network device may be a PCF. Of course, the fourth core network device may be other devices with specific similar functions, which is not limited in the embodiments of the present disclosure.

In addition, in the embodiment of the present disclosure, acquiring the information of the PCC rule by the second core network device may be performed in an SMF initiated SM Policy Association Modification procedure. Of course, in the embodiment of the present disclosure, the process of acquiring the PCC rule may be an independent process.

In some scenarios, the first PDU session may be the same as the second PDU session, or in other words, the second terminal device may multiplex the first PDU session to transmit the target service. For example, when the access network device of the first terminal device is the same as the access network device of the second terminal device, the second terminal device may multiplex the first PDU session to transmit the target service.

When the second terminal device multiplexes the PDU session of the first terminal device, all QoS flows in the PDU session of the first terminal device may be migrated to the second terminal device.

In some implementations, the access network device may configure, based on the QoS parameter of the target service, a QoS parameter for a QoS flow used by the second PDU session to transmit the target service. That is to say, if the network device is an access network device, the method further includes: the access network device acquires information for indicating an association relationship between the first terminal device and the second terminal; the access network device determines, based on the information for indicating the association relationship, QoS configuration associated with the information for indicating the association relationship; and the access network device configures the second QoS flow of the second terminal device based on the QoS configuration associated with the information for indicating the association relationship.

In some implementations, the second core network device may allocate address information to the second PDU session. That is to say, if the network device is a second core network device, the method includes: in response to receiving the first request, the second core network device allocates address information to the second terminal device.

In some implementations, the address information of the second terminal device satisfies one of the following: the address information of the second terminal device is the same as the address information of the first terminal device; the address information of the second terminal device is different from the address information of the first terminal device; and the address information of the second terminal device belongs to a target address information segment, where the target address information segment is associated with a target user, the target user being a common user of the first terminal device and the second terminal device.

In some scenarios, when the address information of the second terminal device is different from the address information of the first terminal device, when configuring the N4 rule, the second core network device may update source address information and/or destination address information in the original N4 rule corresponding to the first terminal device to the address information of the second terminal device.

In other scenarios, if the address information of the second terminal device is the same as the address information of the first terminal device, the second core network device does not update the original N4 rule corresponding to the first terminal device when configuring the N4 rule, so as to simplify the configuration process of the N4 rule.

In some scenarios, the second core network device needs to determine the second terminal device based on the first request. That is to say, if the target terminal device is the first terminal device and the network device is the second core network device, the method further includes: in response to receiving the first request, the second core network device determines the second terminal device. Depending on different information carried in the first request, manners for the second core network device to determine the second terminal device may be different.

In some implementations, if the first request carries information for indicating the association relationship between the first terminal device and the second terminal device, the operation that the second core network device determines the second terminal device includes: the second core network device determines, based on the association relationship, a terminal device having the association relationship with the first terminal device as the second terminal device.

In some implementations, if the first request carries information for indicating the second terminal device, the operation that the second core network device determines the second terminal device includes: the second core network device determines the second terminal device based on the information for indicating the second terminal device.

In some implementations, if the first request includes information for determining a second PDU session, the method further includes: the second core network device determines the second PDU session based on the first request.

Several implementation manners of the first request, configuration manners of the QoS parameter, configuration manners of the second terminal device and configuration manners of the second PDU session according to the embodiments of the present disclosure have been described above, and these manners may be arbitrarily combined with each other, which is not limited in the embodiments of the present disclosure. In order to facilitate understanding, the method for migrating a target service in the embodiments of the present disclosure will be described below based on examples 1 to 3. The method is described in the example 1 by taking as an example a process in which the first terminal device triggers the first request, and taking a second PDU session modification process into account. The method is described in the example 2 by taking as an example a process in which the second terminal device triggers the first request, and taking a second PDU session establishment process into account. The method is described in the example 3 by taking as an example a process in which the second terminal device triggers the first request, and taking a second PDU session multiplexing process into account.

For the example 1, FIG. 5 shows a schematic flowchart for migrating a target service according to an embodiment of the present disclosure. The method shown in FIG. 5 includes operations S510 to S580. It is assumed that a user needs to migrate a target service from a first terminal device (also referred to as a "source UE", or S-UE) to a second terminal device (also referred to as a "target UE", or T-UE).

In operation S510, the first terminal device sends a first request to the access network device, where the first request is used to request migration of a first QoS flow, the first QoS flow is used for carrying a target service, or the first QoS flow is a QoS flow of the first terminal device.

Generally, the service contents are not perceived within a 5G system (5GS), so the target service migration can only be optimized by adjusting the scheduled QoS flow in the 5GS. That is to say, the migration of the target service is equivalent to the migration of the QoS flow in the 5GS.

In some implementations, the first request is used to inform the network device (including the core network device and the access network device) of the second terminal device and the first QoS flow that needs to be migrated. Thus, the first request includes at least one or more of the following information 1 to 8.

The information 1 is identification information of the first terminal device. The identification information of the first terminal device may be, for example, one or more of: an ID of the first terminal device, an IP address of the first terminal device, and an MAC address of the first terminal device.

The information 2 is an identifier (ID) of a first PDU session.

The information 3 is identification information of the first QoS flow in the first terminal device. The identification information may include, for example, QFI and/or flow description information. The flow description information may include a source address, a destination address, a source port number, a destination port number, a protocol identifier, and the like.

It is to be noted that the first QoS flow may include IDs of one or more QoS flows, that is to say, the QoS flow to be migrated may include one QoS flow or multiple QoS flows.

The information 4 is identification information of the second terminal device. The identification information of the second terminal device may be, for example, one or more of: an ID of the second terminal device, an IP address of the second terminal device, and an MAC address of the second terminal device.

It should be understood that this information is applicable to a scenario in which the first terminal device can obtain the identification of the second terminal device. For example, the first terminal device is a mobile phone and the second terminal device is a television, and accordingly, the above scenario may include that the user binds IP address identification information of the television in the mobile phone in advance. For another example, the first terminal device is connected to the second terminal device through Bluetooth, D2D, or the like, and acquires identification information of the second terminal device.

The information 5 is information for indicating an association relationship between the second terminal device and the first terminal device.

It is to be noted that, assuming that information for indicating the association relationship between the second terminal device and the first terminal device is registered in the subscription message stored in the UDM/UDR, then one or more of a user ID indicating the association relationship, a group ID indicating the association relationship, and a correlation ID indicating the association relationship may be used to assist the network device (the core network device and the access network device) in configuring the QoS parameter for the second QoS flow for transmitting the target service in the second terminal device. The QoS parameter may be, for example, the same as the QoS parameter of the first QoS flow in the first terminal device, or may be a QoS parameter pre-configured for the QoS flow.

The information 6 is a QoS parameter corresponding to a QoS flow for transmitting the target service.

The information 7 is application service description information of the target service. The application service description information may include an application identifier, a DNN, S-NSSAI, a packet filter, and the like.

The information 8 is an ID of a second PDU session for transmitting the target service in the second terminal device.

It is to be noted that, among the information carried by the first request, the information 1 may be a parameter required to be included. The combination of the information 1 and the information 4, and the information 5 are two implementations for indicating to the network device that the first terminal device has an association relationship with the second terminal device. The information 2 may be a required parameter for informing the network device of the first PDU session. The information 3 may be an optional parameter, and if this information is not included in the first request, it is indicated that all QoS flows in the first PDU session need to be migrated to the second terminal device. The information 6 may be an optional parameter, and if the first request does not include this information, after the first QoS flow is migrated to the second PDU session, the QoS parameter may be the QoS parameter of the second QoS flow in the second PDU session. The information 7 or information 8 is used to assist the SMF in determining the second PDU session.

In operation S520, the access network device forwards the received first request to the AMF.

In operation S530, the AMF forwards the received first request to the SMF.

In operation S540, in response to receiving the first request, the SMF determines the second terminal device based on the first request.

In an implementation, if the first request carries identification information of the second terminal device, the SMF may determine the second terminal device based on the identification information of the second terminal device.

In an implementation, if the first request carries information for indicating the association relationship (e.g., user ID, group ID, or association relationship ID), the SMF may determine the second terminal device by querying a subscription message. The subscription message has recorded therein the second terminal device associated with the information for indicating the association relationship.

In operation S550, the SMF determines the second PDU session.

For example, if the ID of the second PDU session is carried in the first request, the SMF may determine the second PDU session by the ID of the second PDU session. For another example, if the first request carries service description information (e.g., application identifier, DNN, S-NSSAI, IP quintuple) of the target service, the SMF may determine the second PDU session based on the service description information of the target service.

In operation S560, the SMF configures a QoS parameter for the second QoS flow of the second terminal device.

In some implementations, the SMF configures the QoS parameter for the second QoS flow by querying the subscription message. The subscription message includes a QoS parameter associated with the association relationship, or the subscription message includes a QoS parameter associated with the second terminal device.

In some implementations, if the first request carries a QoS parameter of a QoS flow for transmitting the target service, the SMF configures the QoS parameter carried in the first request for the second QoS flow.

In some implementations, the SMF configures, for the second QoS flow, a same QoS parameter as the migrated first QoS flow.

In operation S570, the SMF configures an N4 rule for the UPF, configures a QoS rule and a QoS parameter at the QoS flow level for the second terminal device, and configures a QoS configuration for the access network device, so as to map the packet of the target service to the second QoS flow.

For example, the SMF sends N4 rules (e.g., PDRs, URRs, QERs, FARs, etc.) related to the first QoS flow to the UPF. In addition to the N4 rule, the SMF may also send a QFI of the second QoS flow and the N4 session ID to the UPF.

Then, the SMF sends QoS configuration (or QoS profile) and/or alternative QoS configuration (or QoS profile) to an access network device accessed by the second terminal device. The QoS configuration may include QoS parameters such as 5QI, ARP, RQA, GFBR, and MFBR. Furthermore, the SMF sends the QFI corresponding to each QoS configuration to the access network device.

Then, the SMF sends the QFI, the QoS rule corresponding to each QFI, and the QoS parameter at the QoS flow level to the second terminal device through the access network device.

It is to be noted that the above operation S570 may be implemented through initiating a PDU session modification procedure by the SMF. In the PDU session modification procedure, the second terminal device returns a PDU session modification acknowledgement message to the SMF through the RAN and the AMF.

In addition, one or more of the PDR, the QoS rule, and the QoS configuration may be a QoS flow configuration parameter with the granularity of terminal devices. Of course, one or more of the PDR, the QoS rule, and the QoS configuration may be a QoS flow configuration parameter with the granularity of users, which is not limited in the embodiments of the present disclosure.

In operation S580, in response to receiving the PDU session modification acknowledgement message, the SMF may initiate a PDU session release procedure to release the first PDU session. For example, the SMF may release an IP address, a UPF resource and the like allocated to the first terminal device. Accordingly, the access network device may release the radio resources allocated to the first terminal device.

In the embodiment of the present disclosure, on one hand, the first terminal device initiates the first request, and at this time, the first request may carry the QoS parameter of the first QoS flow, which is helpful for the second terminal device to obtain the QoS parameter of the first QoS flow, so as to avoid the problem of QoS inconsistency after the cross-terminal migration of the target service.

On the other hand, in the embodiment of the present disclosure, the second terminal device can be determined by the pre-configured association information, which helps to avoid the problem that the first terminal device cannot determine the second terminal device and cannot determine the migration target.

Furthermore, the first terminal device initiates the first request, and the first terminal device may determine the first QoS flow to be migrated, and at this time, the first terminal device may directly inform the core network device of the first QoS flow, thereby facilitating the SMF to determine the QoS parameter of the QoS flow required to be configured for the second terminal device.

Furthermore, when the service migration request is initiated by the first terminal device, the first PDU session may be released after the migration process is completed, thereby ensuring the continuity of the target service migrated between terminals.

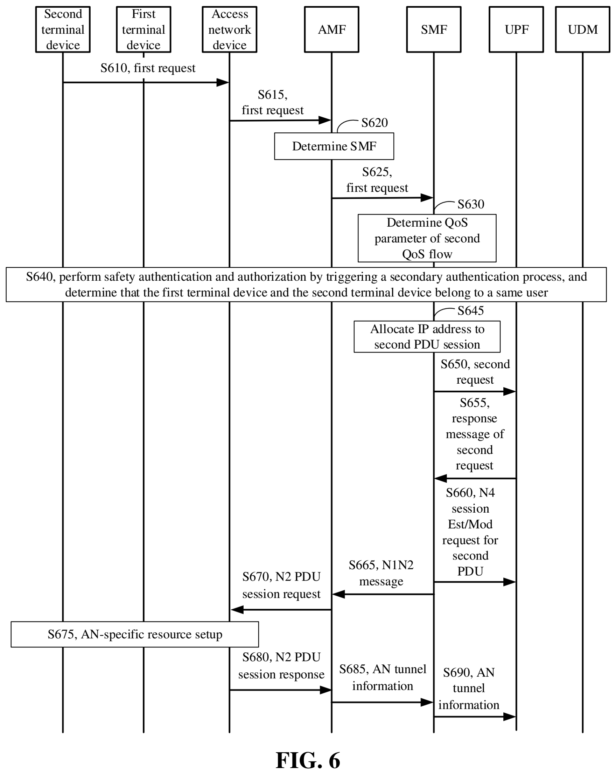

For the example 2, FIG. 6 shows a schematic flowchart for migrating a target service according to another embodiment of the present disclosure. The method shown in FIG. 6 includes operations S610 to S690. It is assumed that a user needs to migrate a target service from a first terminal device (also referred to as a "source UE", or S-UE) to a second terminal device (also referred to as a "target UE", or T-UE).

In operation S610, the second terminal device sends a first request to the access network device, where the first request is used to request migration of a first QoS flow, the first QoS flow is used for carrying a target service, or the first QoS flow is a QoS flow of the first terminal device.

Generally, the service contents are not perceived within a 5G system (5GS), so the target service migration can only be optimized by adjusting the scheduled QoS flow in the 5GS. That is to say, the migration of the target service is equivalent to the migration of the QoS flow in the 5GS.

In some implementations, the first request may be carried by a PDU session establishment request or a PDU session modification request.

In some implementations, the first request includes at least one or more of the following information 1 to 6.

The information 1 is identification information of the second terminal device. The identification information of the second terminal device may be, for example, one or more of: an ID of the second terminal device, an IP address of the second terminal device, and an MAC address of the second terminal device.

The information 2 is information for indicating an association relationship between the second terminal device and the first terminal device.

The information 3 is identification information of the first terminal device. The identification information of the first terminal device may be, for example, one or more of: an ID of the first terminal device, an IP address of the first terminal device, and an MAC address of the first terminal device.

The Information 4 is an ID of the second PDU session.

The information 5 is application service description information of the target service. The application service description information may include an application identifier, a DNN, S-NSSAI, a packet filter, and the like.

The information 6 is information such as a device resolution size of the second terminal device.

It is to be noted that, among the information carried by the first request, the information 1 may be a parameter required to be included. The combination of the information 1 and the information 3, and the information 2 are two implementations for indicating to the network device that the first terminal device has an association relationship with the second terminal device. The information 4 may be a parameter that must be included. The information 5 may be an optional parameter, where the packet filter may be used to assist in identifying the first QoS flow of the first terminal device, and information such as the application identifier, the DNN and the S-NSSAI may be used to identify the first PDU session. The information 6 may be an optional parameter, and is used for assisting the SMF in selecting an appropriate QoS parameter for the second QoS flow of the second terminal device.

In operation S615, the access network device forwards the received first request to the AMF.

In operation S620, the AMF finds a target SMF according to one or more of the DNN, S-NSSAI, and user ID.

In operation S625, the AMF forwards the first request to the target SMF.

In operation S630, the SMF determines a QoS parameter of the second QoS flow of the second terminal device.

For example, if the first request carries only the identifier of the first terminal device and the identifier of the second terminal device, the SMF determines the first PDU session and the first QoS flow to further determine the first QoS flow and the corresponding QoS parameter thereof.

For another example, if the first request carries identification information for indicating the association relationship, and correspondence relationships between the identification information for indicating the association relationship and QoS parameters of target services are registered in the core network element (such as SMF, UDM, UDR), the SMF may acquire locally an N4 rule corresponding to the association relationship , or the SMF may acquire the QoS parameter corresponding to the target service from the core network element such as UDM, PCF, etc.

For another example, if the first request includes the resolution size information of the second terminal device and a mapping relationship between the device resolution size information and QoS parameters is configured in the SMF locally or in the subscription message of the second terminal device, the SMF may obtain the QoS parameter of the second QoS flow of the second terminal device according to the aforementioned contents in the first request.

It should be noted that if the SMF does not have the corresponding local subscription information for session management, the SMF can obtain the subscription information from the UDM.

In operation S635, the SMF returns a response message for the first request to the AMF, where the response message is used to indicate whether the SMF is capable of processing the first request. If the first request is rejected, the SMF may include a reason for rejecting the first request in the response message.

In operation S640, the SMF may perform security authentication and authentication by triggering a secondary authentication process to confirm that the first terminal device and the second terminal device belong to a same user.

For example, when the first request includes the ID of the first terminal device and the ID of the second terminal device, the SMF may perform security authentication and authentication by triggering the secondary authentication process to confirm that the first terminal device and the second terminal device belong to the same user. For another example, when the first request includes the identifier of the second terminal device and the user ID, the SMF may perform security authentication and authentication by triggering the secondary authentication process to confirm that the first terminal device belongs to the same user.

In operation S645, the SMF allocates an IP address to the second PDU session. The IP address may be one of a set of IP addresses, which is allocated to correspond to the user ID. The set of addresses may be pre-configured on a core network element such as an SMF, or may be stored in a UDM as a user subscription message.

In some scenarios, if the first request carries information such as the DNN/S-NSSAI and the user ID, the SMF may determine a PCF and a PDU Session Anchor UPF (PSA UPF) based on the first request.

In operation S650, the SMF sends a second request to the PCF to request policy information associated with the target service.

In some implementations, the second request carries a user ID, an ID of a second terminal device, and an IP address allocated for the second PDU session.

In operation S655, the PCF sends a response message for the second request to the SMF, where the response message for the second request carries the PCC rule corresponding to the target service.

It is to be noted that the above operations S650 and S655 may be performed in an SMF initiated Session Management (SM) policy association modification procedure.

In operation S660, the SMF sends, to the UPF, an N4 session establishment or modification request for the second PDU session.

In some implementations, the SMF provides the UPF with N4 rules for the second PDU session. Furthermore, if the SMF is configured to request the UPF to allocate an address, the UPF is instructed to perform address allocation. The UPF will also provide Core Network (CN) tunnel information to SMF.

In operation S665, the SMF sends an N1N2 message (Namf_Communication_N1N2MessageTransfer) to the AMF. The message carries the QoS configuration, the QoS rules, the QoS parameters at the QoS flow level, the QFIs associated with the QoS parameters at the QoS flow level, and the user identifier. In addition, the SMF will also provide the CN tunnel information to the RAN.

In operation S670, the AMF sends an N2 PDU session request to the access network device, the request carrying the information in operation S665.

In operation S675, the access network device performs signaling interaction with the second terminal device to perform an AN-specific resource setup process. In this process, radio resources may be allocated for the second PDU session, and QoS rules and QoS flow level QoS parameters, QFIs associated therewith, and user ID may be sent to the UE. Access Network (AN) tunnel information is allocated to the PDU session.

In operation S680, the RAN transmits an AN N2 PDU session response to the AMF, the N2 PDU session response carrying the AN tunnel information.

In operation S685, the AMF provides the AN tunnel information to the SMF. The AN tunnel information may be carried in the Nsmf_PDUSession_CreateSMContext Request.

In operation S690, the SMF provides the AN tunnel information to the UPF. The AN tunnel information may be carried in the N4 session establishment/modification request.

In the embodiment of the present disclosure, the second terminal device triggers the first request and establishes the second PDU session, then the configuration of QoS parameters can be directly performed in the PDU session establishment and modification processes initiated by the second terminal device for the first time. In this way, the QoS parameters of the second QoS flow can be adjusted without the need to initiate the PDU session modification process by the network device for the second time until the target service is migrated, thereby reducing the signaling interaction process of configuring the QoS parameters while ensuring the stability of the QoS for target service migration.

For the example 3, FIG. 7 shows a schematic flowchart for migrating a target service according to another embodiment of the present disclosure. The method shown in FIG. 7 includes operations S710 to S790. It is assumed that a user needs to migrate a target service from a first terminal device (also referred to as a "source UE", or S-UE) to a second terminal device (also referred to as a "target UE", or T-UE), and the first terminal device and the second terminal device access a same access network device.

In operation S710, the second terminal device sends a first request to the access network device, where the first request is used to request migration of a first QoS flow, the first QoS flow is used for carrying a target service, or the first QoS flow is a QoS flow of the first terminal device.

Generally, the service contents are not perceived within a 5G system (5GS), so the target service migration can only be optimized by adjusting the scheduled QoS flow in the 5GS. That is to say, the migration of the target service is equivalent to the migration of the QoS flow in the 5GS.

In some implementations, the first request may be carried by a PDU session establishment request or a PDU session modification request.

In some implementations, the first request includes at least one or more of the following information 1 to 6.

The information 1 is identification information of the second terminal device. The identification information of the second terminal device may be, for example, one or more of: an ID of the second terminal device, an IP address of the second terminal device, and an MAC address of the second terminal device.

The information 2 is information for indicating an association relationship between the second terminal device and the first terminal device.

The information 3 is identification information of the first terminal device. The identification information of the first terminal device may be, for example, one or more of: an ID of the first terminal device, an IP address of the first terminal device, and an MAC address of the first terminal device.

The information 4 is an ID of a second PDU session for transmitting the target service in the second terminal device.

The information 5 is application service description information of the target service. The application service description information may include an application identifier, a DNN, S-NSSAI, a packet filter, and the like.

The information 6 is information such as a device resolution size of the second terminal device.

It is to be noted that, among the information carried by the first request, the information 1 may be a parameter required to be included. The combination of the information 1 and the information 3, and the information 2 are two implementations for indicating to the network device that the first terminal device has an association relationship with the second terminal device. The information 4 may be a parameter that must be included. The information 5 may be an optional parameter, where the packet filter may be used to assist in identifying the first QoS flow of the first terminal device, and information such as the application identifier, the DNN and the S-NSSAI may be used to identify the first PDU session. The information 6 may be an optional parameter, and is used for assisting the SMF in selecting an appropriate QoS parameter for the second QoS flow of the second terminal device.

In operation S720, the access network device configures a QoS parameter for the second QoS flow of the second terminal device. For example, the access network device may directly allocate the QoS configuration information associated with the association relationship to the second QoS flow of the second terminal device.

In operation S730, the access network device sends, to the AMF, identification information of the second terminal device and information for indicating the association relationship (identification information of the user), both of which are carried in the first request.

In operation S740, the AMF sends, to the SMF, the identification information of the second terminal device and information for indicating the association relationship (identification information of the user).

In operation S750, the SMF allocates an IP address to the second terminal device.

In some implementations, the IP address of the second terminal device may be the same as the IP address of the first terminal device. Or, the IP address of the second terminal device may be different from the IP address of the first terminal device. Or, the IP address of the second terminal device may be a part of an address segment allocated by the SMF for the user to which the second terminal device belongs.

Furthermore, the SMF configures the N4 rule for a PSA UPF corresponding to the second PDU session ID, the DNN or the S-NSSAI. Specifically, the SMF may update the source IP address information and the destination IP address information in the N4 rule associated with the first terminal device to the IP address information of the second terminal device.

It is to be noted that, if the IP address of the second terminal device is the same as the IP address of the first terminal device, or if the IP address of the second terminal device may be a part of an address segment allocated by the SMF to the user to which the second terminal device belongs, the above-described process of updating the source IP address information and the destination IP address information in the N4 rule to the IP address information of the second terminal device may be omitted.

In operation S760, the SMF sends the QoS rule, the QoS parameter, and the IP address of the second terminal device to the access network device through the AMF.

In operation S770, the access network device sends the QoS rule, the QoS parameter, and the IP address of the second terminal device to the second terminal device.

In operation S780, the second terminal device and the access network device establish, though signaling interaction, an air interface resource for carrying the target service.

In operation S790, the access network device releases the air interface resource allocated to the first terminal device for migrating the target service.

In the example of the present disclosure, when the first terminal device and the second terminal device are served by a same access network, the same PDU session may be used. At this time, there is no need to re-establish a new GTP-U tunnel for the second terminal device, i.e.,, a user plane path between the PSA UPF and the access network device, and there is no need to re-bind a QoS parameter for the QoS flow in the PDU session, and to quickly establish a user plane data transmission channel for the second terminal device, what needed is only updating of the radio bearer of the air interface, thereby reducing the time required for cross-terminal migration of the target service.

As described above, in some scenarios, the QoS parameter of the QoS flow for transmitting the target service may be provided by the AF, for example, the AF may provide the QoS parameter in the process of establishing the AF session. Hereinafter, with reference to FIG. 8, an AF session establishment process according to the embodiment of the present disclosure is described by taking the QoS parameter being a QoS parameter associated with the user as an example. FIG. 8 is a schematic diagram showing an AF session establishment process according to an embodiment of the present disclosure. The method shown in FIG. 8 includes operations S810 to S880.

In operation S810, the AF sends request 1 to the NEF to request reservation of resources for an AF session.

In some implementations, the request 1 may include information such as a user identifier of the target user, address information (including IP address and/or MAC address) of a terminal device that the target user is using or has used, an AF identifier, flow description information, a QoS reference or an individual QoS parameter, or a PDU set QoS parameter, protocol description information, alternative target service requirements, and the like.

In some implementations, the request 1 may be a request to create an AF session with QoS parameter (also referred to as "Nnef_AFsessionWithQoS_Create request") or a request to update an AF session with QoS parameter ("Nnef_AFsessionWithQoS_Update").

In operation S820, the NEF authorizes the request 1, generates a transaction feference ID for the AF session, and associates (or binds) the transaction reference ID with (or to) the user ID of the target user and the address of the terminal device associated with the target user. If the authorization fails, operation S850 is performed.

In operation S830, if the authorization is successful, the NEF may discover the PCF through the BSF using the user identifier of the target user or the address information of the terminal device, and forward the information such as the user identifier of the target user and the QoS parameter carried in the request 1 to the PCF.

In some implementations, the above information interacted between the PCF and the NEF may be carried through a policy authorization creation request (Npcf_PolicyAuthorization_Create request).

If the AF is a trusted AF, the request 1 can be directly sent to the PCF without being forwarded by the NEF.

In operation S840, the PCF confirms whether or not the request is authorized, and notifies the NEF or the AF if not. If the request is authorized, the PCF derives the QoS parameters required by the PCC rule according to the information provided by the NEF or the AF, determines whether to allow this QoS (according to the configuration of the PCF), and notifies the NEF of the result, or directly notifies the result to the trusted AF.

In some implementations, the above information interacted between the PCF and the NEF or AF may be carried through a policy authorization creation response (Npcf_PolicyAuthorization_Create response).

In operation S850, the NEF returns, to the AF, a request response message including the transaction reference ID, the user ID and the authorization result. In some implementations, the request response message may be Nnef_AFsessionWithQoS_Create reSponse.

In operation S860, the NEF sends a subscription request to the PCF to request subscribe to a resource allocation status and specific events of a terminal device associated with the target user. In some implementations, the subscription request may be Npcf_PolicyAuthorization_Subscribe. In some implementations, the subscription request may carry a user identifier of the target user.

In operation S870, when the preset condition is satisfied, the PCF transmits a notification message 1 to the NEF, which carries the event to which the NEF subscribes. Here, the notification message is also referred to as "Npcf_PolicyAuthorization_Notify".

In some implementations, the preset condition may include: the establishment of the transmission resource corresponding to the QoS update is successful or failed. Furthermore, the notification message 1 may carry the user identifier of the target user.

In operation S880, the NEF sends a notification message 2 to the AF, which carries the event to which the NEF subscribes. Herein, the notification message is also referred to as "Nnef_AFsessionWithQoS_Notify". Furthermore, the notification message 2 may carry the user identifier of the target user.

In the embodiment of the present disclosure, a method for the AF to configure the QoS parameter based on the target user for the network is provided, so as to facilitate the configuration of QoS parameter of the second QoS flow based on the QoS parameter associated with the target user.

In addition, in the embodiment of the present disclosure, when the binding mechanism is performed (see operation S820), the AF session of this embodiment may be bound to the second PDU session of the second terminal device (which may be a newly established PDU session or the first PDU session multiplexed as in the example 3). Then, the QoS parameter based on the target user is configured for the QoS flow carrying the target service through the PCC rule authorization and QoS flow binding mechanism.

It should be noted that the above-described AF session can be understood as an AF session based on the target user, and the AF session can be bound to a PDU session established by the target user. Thus, for multiple terminal devices associated with a same user, it is possible to avoid a large amount of signaling overheads and the time delay caused by the need of bounding multiple PDU sessions established for the same target service to multiple AF sessions.

The embodiments of the method of the present disclosure are described in detail with reference to FIG. 1 to FIG. 8, and embodiments of the device of the present disclosure are described in detail with reference to FIG. 9 to FIG. 13. It should be understood that the description of the method embodiments corresponds to the description of respective device embodiments, therefore for portions not described in detail, reference can be made to the foregoing method embodiments.

FIG. 9 is a schematic diagram of a terminal device according to an embodiment of the present disclosure. The terminal device shown in FIG. 9 is a target terminal device, and the terminal device 900 includes a sending unit 910.

The sending unit 910 is configured to send a first request to a network device, the first request being used to request migration of a target service from a first terminal device to a second terminal device, herein the target terminal device is the first terminal device or the second terminal device.

In some implementations, the first request includes one or more of: information for indicating the first terminal device; information for indicating the second terminal device; information for determining a second Protocol Data Unit (PDU) session; or information for indicating an association relationship between the first terminal device and the second terminal device.

In some implementations, if the first request includes the information for indicating the first terminal device, the information for indicating the first terminal device includes an identifier of the first terminal device and/or address information of the first terminal device.

In some implementations, if the first request includes the information for indicating the second terminal device, the information for indicating the second terminal device includes an identifier of the second terminal device and/or address information of the second terminal device.

In some implementations, if the first request includes the information for indicating the association relationship, the information for indicating the association relationship includes one or more of: identification information of a terminal group in which the first terminal device and the second terminal device are located;

identification information of a user to which the first terminal device and the second terminal device belong; and identification information of the association relationship between the first terminal device and the second terminal device.

In some implementations, if the first request includes the information for indicating the second PDU session, the information for indicating the second PDU session includes application service description information of the target service and/or an identifier of the second PDU session.

In some implementations, if the target device is the first terminal device, the first request includes one or more of: information for indicating a first PDU session; information for indicating a first QoS flow; and a QoS parameter of a QoS flow for transmitting the target service.

In some implementations, the first request includes the information for indicating the first QoS flow, the information for indicating the first QoS flow including: a QoS Flow Identifier (QFI) of the first QoS flow, and/or flow description information of the first QoS flow.

In some implementations, if the first request includes information for indicating the first PDU session, the information for indicating the first PDU session includes an identifier of the first PDU session.

In some implementations, if the target terminal device is the first terminal device, the first request is used to request migration of a first QoS flow from the first terminal device to the second terminal device.

In some implementations, if the target device is the second terminal device, the first request includes resolution information of the second terminal device.

In some implementations, the resolution information of the second terminal device is used to determine a QoS parameter of a second QoS flow of the second terminal device.

In some implementations, if the target terminal device is the second terminal device, the first request is carried in a PDU session establishment request, and the PDU session establishment request is used to request establishment of a PDU session for the target service; or, the first request is carried in a PDU session modification request, and the PDU session modification request is used to request to modify the PDU session for transmitting the target service.

In some implementations, the PDU session used by the first terminal device for transmitting the target service is the same as the PDU session used by the second terminal device for transmitting the target service, or the QoS parameter of the first QoS flow used by the first terminal device for transmitting the target service is the same as the QoS parameter of the second QoS flow, or the QoS configuration of the first QoS flow of the first terminal device is the same as the QoS configuration of the second QoS flow of the second terminal device.

In some implementations, if the first PDU session is the same as the second PDU session, a network device accessed by the first terminal device is the same as a network device accessed by the second terminal device.

In some implementations, address information of the first terminal device is the same as address information of the second terminal device; or, the address information of the first terminal device is different from the address information of the second terminal device.

In some implementations, a user of the first terminal device is the same as a user of the second terminal device, and a QoS parameter of the target service is associated with the user.

The QoS flow(s) for transmitting the target service is/are part or all of QoS flows in an associated PDU session.

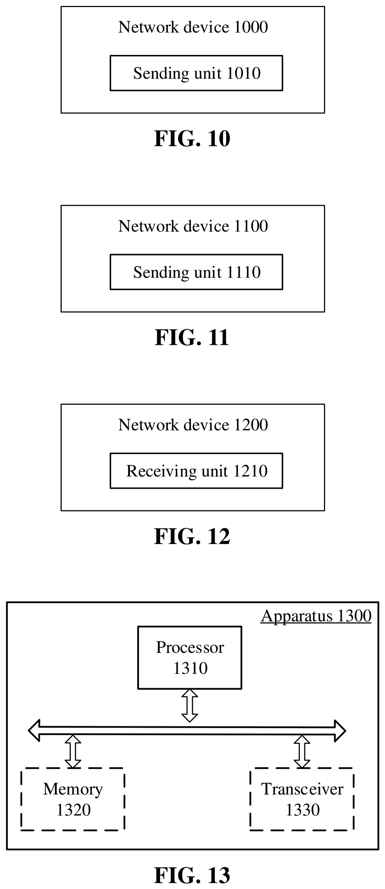

FIG. 10 is a schematic diagram of a network device according to an embodiment of the present disclosure. The network device 1000 illustrated in FIG. 10 includes a receiving unit 1010.

The receiving unit 1010 is configured to receive a first request sent by a target terminal device. The first request is configured to request migration of a target service from the first terminal device to the second terminal device; and the target terminal device is a first terminal device or a second terminal device.

In some implementations, the first request includes one or more of: information for indicating the first terminal device; information for indicating the second terminal device; information for determining a second Protocol Data Unit (PDU) session; or information for indicating an association relationship between the first terminal device and the second terminal device.

In some implementations, if the first request includes the information for indicating the first terminal device, the information for indicating the first terminal device includes an identifier of the first terminal device and/or address information of the first terminal device.

In some implementations, if the first request includes the information for indicating the second terminal device, the information for indicating the second terminal device includes an identifier of the second terminal device and/or address information of the second terminal device.

In some implementations, if the first request includes the information for indicating the association relationship, the information for indicating the association relationship includes one or more of: indication information of a terminal group in which the first terminal device and the second terminal device are located; indication information of a user to which the first terminal device and the second terminal device belong; and identification information of the association relationship between the first terminal device and the second terminal device.

In some implementations, if the first request includes the information for indicating the second PDU session, the information for indicating the second PDU session includes application service description information of the target service and/or an identifier of the second PDU session.

In some implementations, if the target device is the first terminal device, the first request includes one or more of: information for indicating a first PDU session; information for indicating a first QoS flow; and a QoS parameter of a QoS flow for transmitting the target service.

In some implementations, the first request includes the information for indicating the first QoS flow, the information for indicating the first QoS flow including: a QoS Flow Identifier (QFI) of the first QoS flow, and/or flow description information of the first QoS flow.

In some implementations, if the first request includes information for indicating the first PDU session, the information for indicating the first PDU session includes an identifier of the first PDU session.

In some implementations, if the target terminal device is the first terminal device, the first request is used to request migration of a first QoS flow from the first terminal device to the second terminal device.

In some implementations, if the target device is the second terminal device, the first request includes resolution information of the second terminal device.

In some implementations, the resolution information of the second terminal device is used to determine a QoS parameter of a second QoS flow for transmitting the target service by the second terminal device.

In some implementations, if the network device is a second core network device, the network device further includes: a first processing unit, configured to configure a QoS parameter for a second QoS flow of the second terminal device.

In some implementations, the network device further includes: a first acquiring unit, configured to acquire subscription information, the subscription information recording a QoS parameter of a QoS flow for transmitting the target service; and the first processing unit is configured to configure the QoS parameter for the second QoS flow based on the subscription information.

In some implementations, the subscription information is subscription information associated with a target user, a QoS parameter carried by the subscription information is associated with the target user, and the target user is a common user of the first terminal device and the second terminal device; or, the subscription information is subscription information of the second terminal device, and the QoS parameter carried by the subscription information is associated with the second terminal device.

In some implementations, if the first request carries a QoS parameter of a QoS flow for transmitting the target service, the first processing unit is configured to configure the QoS parameter for the second QoS flow based on the first request.

In some implementations, the first processing unit is configured to: acquire a first QoS parameter, the first QoS parameter being a QoS parameter of a first QoS flow used by the first terminal device to transmit the target service; and configure a QoS parameter for a second QoS flow of the second terminal device based on the first QoS parameter.

In some implementations, if the first request includes information for indicating the first terminal device and information for indicating the second terminal device, the network device further includes: a second processing device, configured to determine, based on the information for indicating the first terminal device, a first QoS flow in the first terminal device for transmitting the target service, and a QoS parameter of the first QoS flow; and the first processing unit is configured to configure the QoS parameter for the second QoS flow based on the QoS parameter of the first QoS flow.

In some implementations, if the first request includes information for indicating an association relationship between the first terminal device and the second terminal device, the network device further includes: a third processing unit, configured to determine, based on the association relationship, a QoS parameter corresponding to the association relationship; and the first processing unit is configured to configure the QoS parameter for the second QoS flow of the second terminal device based on the QoS parameter corresponding to the association relationship.

In some implementations, if the first request includes resolution information of the second terminal device, the network device further includes: a fourth processing unit, configured to determine a QoS parameter corresponding to the resolution information of the second terminal device based on the resolution information of the second terminal device and pre-stored correspondence relationships between resolution information and QoS parameters; and the first processing unit is configured to configure the QoS parameter for the second QoS flow of the second terminal device based on the QoS parameter corresponding to the resolution information of the second terminal device.

In some implementations, the fifth processing unit is configured to allocate address information to the second PDU session.

In some implementations, the network device further includes: a first sending unit, configured to send a second request to a fourth core network device, the second request being used to request transmission of a Policy and Charging Control (PCC) rule of the target service; and the receiving unit is configured to receive a response message for the second request sent by the fourth core network device, the response message carrying the PCC rule.

In some implementations, the second request carries information for indicating the second terminal device and/or address information of the second PDU session.

In some implementations, the network device further includes: a sixth processing unit, configured to configure, for a third core network device, an N4 rule corresponding to a second QoS flow and/or a QoS rule corresponding to the second QoS flow.

In some implementations, the N4 rule corresponding to the second QoS flow and/or the QoS rule corresponding to the second QoS flow are carried in a PDU session modification request, and the PDU session modification request is used to request modification of the PDU session for transmitting the target service.

In some implementations, the N4 rule corresponding to the second QoS flow includes one or more of: a packet detection rule, a forwarding action rule, a QoS enforcement rule, and a usage reporting rule.

In some implementations, the network device further includes: a second sending unit, configured to send QoS configuration of the second QoS flow and/or alternative QoS configuration of the second QoS flow to an access network device, the access network device serving the second terminal device.

In some implementations, the network device further includes: a seventh processing unit, configured to configure a QoS rule of a second QoS flow for a second terminal device.

In some implementations, a first PDU session of the first terminal device is the same as a second PDU session of the second terminal device; or a QoS parameter of a first QoS flow of the first terminal device is the same as a QoS parameter of a second QoS flow of the second terminal device; or QoS configuration of the first QoS flow of the first terminal device is the same as QoS configuration of the second QoS flow of the second terminal device.

In some implementations, if the first PDU session is the same as the second PDU session, an access network device of the first terminal device is the same as an access network device of the second terminal device.

In some implementations, the network device is the access network device, and the network device further includes: a second acquiring unit, configured to acquire information for indicating an association relationship between the first terminal device and the second terminal; and an eighth processing unit, configured to determine, based on the information for indicating the association relationship, QoS configuration associated with the information for indicating the association relationship, and configure the second QoS flow of the second terminal device based on the QoS configuration associated with the information for indicating the association relationship.

In some implementations, if the network device is a second core network device, the network device includes: a ninth processing unit, configured to, in response to receiving the first request, allocate address information to the second terminal device. The address information of the second terminal device satisfies one of the following: the address information of the second terminal device is the same as the address information of the first terminal device; the address information of the second terminal device is different from the address information of the first terminal device; and the address information of the second terminal device belongs to a target address information segment, where the target address information segment is associated with a target user, the target user being a common user of the first terminal device and the second terminal device.

In some implementations, if the target terminal device is the second terminal device, the first request is carried in a PDU session establishment request, and the PDU session establishment request is used to request establishment of a PDU session for the target service; or, the first request is carried in a PDU session modification request, and the PDU session modification request is used to request to modify the PDU session for transmitting the target service.

In some implementations, if the network device is a first core network device, the network device further includes: a second sending unit, configured to receive, through an access network device, the first request sent by the target terminal device.

In some implementations, the network device further includes: a third sending unit, configured to send the first request to a second core network device.

In some implementations, the target terminal device is the first terminal device and the network device is a second core network device, then the network device further includes: a tenth processing unit, configured to, in response to receiving the first request, determine the second terminal device.

In some implementations, if the first request carries information for indicating an association relationship between the first terminal device and the second terminal device, the tenth processing unit is configured to determine, based on the association relationship, a terminal device having the association relationship with the first terminal device as the second terminal device.

In some implementations, if the first request carries information for indicating the second terminal device, the tenth processing unit is configured to determine the second terminal device based on the information for indicating the second terminal device.

In some implementations, if the first request includes information for determining the second PDU session, the network device further includes: an eleventh processing unit, configured to determine the second PDU session based on the first request.

The QoS flow(s) for transmitting the target service is/are part or all of QoS flows in an associated PDU session.

FIG. 11 is a schematic diagram of a network device according to another embodiment of the present disclosure. The network device illustrated in FIG. 11 is a fifth core network device, and the network device 1100 includes a sending unit 1110.

The sending unit 1110 is configured to send target information to a sixth core network device, the target information being used to indicate a Quality of Service (QoS) parameter associated with a user, and the user being associated with one or more terminal devices.

In some implementations, third information is carried in a third request, where the third request is used to request creation of an Application Function (AF) session with QoS; or, the third request is used to request updating of the AF session with QoS.

In some implementations, the QoS parameter associated with the user is used when a target service of the user is migrated between a plurality of terminal devices associated with the user.

FIG. 12 is a schematic diagram of a network device according to another embodiment of the present disclosure. The network device shown in FIG. 12 is a sixth core network device, and the network device 1200 includes a receiving unit 1210.

The receiving unit 1210 is configured to receive target information sent by a fifth core network device, the target information being used to indicate a Quality of Service (QoS) parameter associated with a user, and the user being associated with one or more terminal devices.

In some implementations, third information is carried in a third request, where the third request is used to request creation of an Application Function (AF) session with QoS; or, the third request is used to request updating of the AF session with QoS.

In some implementations, the network device further includes: a first processing unit, configured to, in response to receiving the third request, associate a transaction reference identifier of the AF session with a user identifier of the user; and a first sending unit, configured to send a response message for the third request to the fifth core network device, the response message carrying the transaction reference identifier of the AF session and the user identifier of the user.

In some implementations, the network device further includes: a second sending unit, configured to send to a fourth core network device, a fourth request for requesting a Policy and Charging Control (PCC) rule, the fourth request carrying the user identifier of the user and the QoS parameter.

FIG. 13 is a schematic structural diagram of a communication device according to an embodiment of the present disclosure. The dashed line in FIG. 13 indicates that the unit or module is optional. The apparatus 1300 may be used to implement the method in the method embodiments described above. The apparatus 1300 may be a chip, a terminal device, or a network device.

The apparatus 1300 may include one or more processors 1310. The processor 1310 may support the apparatus 1300 to implement the methods described in the previous method embodiments. The processor 1310 may be a general-purpose processor or a special-purpose processor. For example, the processor may be a Central Processing Unit (CPU). Alternatively, the processor may also be another general purpose processor, a Digital Signal Processor (DSP), an Application Specific Integrated Circuit (ASIC), a Field Programmable Gate Array (FPGA) or other programmable logic device, a discrete gate or transistor logic device, a discrete hardware component, or the like. The general-purpose processor may be a microprocessor or the processor may be any conventional processor or the like.

The apparatus 1300 may also include one or more memories 1320. The memory 1320 has stored a program that can be executed by the processor 1310 to cause the processor 1310 to perform the method described in the above method embodiments. The memory 1320 may be independent of the processor 1310 or may be integrated in the processor 1310.

The apparatus 1300 may also include a transceiver 1330. The processor 1310 may communicate with other devices or chips through the transceiver 1330. For example, the processor 1310 may transmit and receive data to or from other devices or chips through the transceiver 1330.

The embodiments of the present disclosure also provide a computer-readable storage medium for storing a program. The computer-readable storage medium can be applied to a terminal or a network device provided by an embodiment of the present disclosure, and the program causes a computer to implement a method performed by the terminal or the network device in each embodiment of the present disclosure.

The embodiments of the present disclosure also provide a computer program product. The computer program product includes a program. The computer program product can be applied to a terminal or a network device provided by an embodiment of the present disclosure, and the program causes a computer to implement a method performed by the terminal or the network device in each embodiment of the present disclosure.

The embodiments of the present disclosure also provide a computer program. The computer program can be applied to a terminal or a network device provided by an embodiment of the present disclosure, and the computer program causes a computer to implement a method performed by the terminal or the network device in each embodiment of the present disclosure.

It is to be understood that the terms "system" and "network" may be used interchangeably in the present disclosure. In addition, the terminology used in the present disclosure is for explanation of specific embodiments of the present disclosure only, and is not intended to limit the present disclosure. The terms "first", "second", "third" and "fourth" etc. in the description and claims of the present disclosure and the accompanying drawings are used to distinguish different objects, and are not used to describe a specific order. Furthermore, the terms "comprising/including" and "having" and any variations thereof are intended to convey non-exclusive inclusions.

In the embodiments of the present disclosure, the "indication" mentioned may be a direct indication, an indirect indication, or may represent that there is an association relationship. For example, A indicates B, which may represent that A directly indicates B, for example, B can be acquired by A; it may also represent that A indicates B indirectly, for example A indicates C, and B can be acquired through C; and it may also represent that there is an association relationship between A and B.

In the embodiments of the present disclosure, "B corresponding to A" means that B is associated with A, and B can be determined from A. However, it should also be understood that determining B from A does not mean that B is determined from A alone, and that B may also be determined from A and/or other information.

In the embodiments of the present disclosure, it should also be understood that the term "corresponding to" in the embodiments of the present disclosure may represent that there is a direct correspondence or an indirect correspondence between two objects, or may further represent that there is an association relationship between the two objects, or may represent a relationship of indicating and being indicated, or configuring and being configured, etc.

In the embodiments of the present disclosure, "predefined" or "pre-configured" may be realized by storing corresponding codes, tables, or other methods that can be used to indicate relevant information in advance in devices (including, for example, terminal devices and network devices), and the present disclosure does not limit specific implementation methods thereof. For example, the term "predefined" may mean that it is defined in a protocol.

In the embodiments of the present disclosure, the "protocol" may refer to a standard protocol in the communication field, and may include, for example, an LTE protocol, an NR protocol, and related protocols applied to future communication systems, which is not limited in the present disclosure.

The term "and/or" in the embodiments of the present disclosure is only an association relationship between objects, and indicates that there may be three kinds of relationships. For example, A and/or B may indicate that A exists alone, A and B exist simultaneously, and B exists alone. In addition, the character "/" in this article generally indicates that the related objects before and after this character are in an "or" relationship.

In various embodiments of the present disclosure, the sequence numbers of the above-described processes do not mean a sequence of execution, and the sequence of execution of each process should be determined by its function and internal logic, and the sequence numbers should not constitute any limitation on the implementation process of the embodiments of the present disclosure.

It should be understood that the systems, devices and methods disclosed in various embodiments of the present disclosure may be implemented in other ways. For example, the device embodiments described above are merely schematic. For example, the division of units is only a division in terms of logical functions, and there may be other division methods in actual implementations. For example, multiple units or components may be combined or integrated into another system, or some features may be ignored or not implemented. In addition, the coupling or direct coupling or communication connection between each other shown or discussed herein may be an indirect coupling, or a communication connection through some interfaces, devices or units, and the coupling or communication connection may be electrical, mechanical or in other forms.

The units described as separate units may or may not be physically separate, and the units displayed as units may or may not be physical units. That is to say, they may be located in one place or may be distributed over multiple network units. Some or all of the units may be selected according to actual needs to achieve the purpose of the schemes of the embodiments.

In addition, functional units in various embodiments of the present disclosure may be integrated in one processing unit, may be physically present separately, or two or more units may be integrated in one unit.

The embodiments described above may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions described in accordance with embodiments of the present disclosure are implemented in whole or in part. The computer may be a general-purpose computer, a special-purpose computer, a computer network, or any other programmable device. The computer instructions may be stored in a computer-readable storage medium or transmitted from one computer-readable storage medium to another computer-readable storage medium. For example, the computer instructions may be transmitted from one website site, computer, server, or data center by wired (e.g., coaxial cable, optical fiber, digital subscriber line (DSL)) or wireless (e.g., infrared, wireless, microwave, etc.) means to another website site, computer, server, or data center. The computer-readable storage medium may be any available medium that can be read by a computer, or a data storage device such as a server, a data center, or the like that is integrated from one or more available media. The available media may be magnetic media (e.g., floppy disk, hard disk, magnetic tape), optical media (e.g., Digital Video Disc (DVD)), or semiconductor media (e.g., Solid State Disk (SSD)), etc.

The foregoing contents are merely specific implementations of the present disclosure, but the scope of protection of the present disclosure is not limited thereto. Any person skilled in the art can readily conceive of changes or substitutions within the technical scope disclosed in the present disclosure, all of which fall within the scope of protection of the present disclosure. Therefore, the scope of protection of the present disclosure should be based on the scope of protection of the claims.

## Claims

1. A method for wireless communication, comprising:
sending, by a target terminal device, a first request to a network device, the first request being used to request migration of a target service from a first terminal device to a second terminal device,
wherein the target terminal device is the first terminal device or the second terminal device.

2. The method of claim 1, wherein the first request comprises one or more of:
information for indicating the first terminal device;
information for indicating the second terminal device;
information for determining a second Protocol Data Unit (PDU) session; and
information for indicating an association relationship between the first terminal device and the second terminal device.

3. The method of claim 2, wherein if the first request comprises the information for indicating the first terminal device, the information for indicating the first terminal device comprises an identifier of the first terminal device and/or address information of the first terminal device.

4. The method of claim 2 or 3, wherein if the first request comprises the information for indicating the second terminal device, the information for indicating the second terminal device comprises an identifier of the second terminal device and/or address information of the second terminal device.

5. The method of any one of claims 2-4, wherein if the first request comprises the information for indicating the association relationship, the information for indicating the association relationship comprises one or more of:
identification information of a terminal group in which the first terminal device and the second terminal device are located;
identification information of a user to which the first terminal device and the second terminal device belong; and
identification information of the association relationship between the first terminal device and the second terminal device.

6. The method of any one of claims 2-5, wherein if the first request comprises the information for indicating the second PDU session, the information for indicating the second PDU session comprises application service description information of the target service and/or an identifier of the second PDU session.

7. The method of any one of claims 1-6, wherein if the target device is the first terminal device, the first request comprises one or more of:
information for indicating a first PDU session;
information for indicating transmission of a first Quality of Service (QoS) flow; and
a QoS parameter of a QoS flow for transmitting the target service.

8. The method of claim 7, wherein the first request comprises the information for indicating the first QoS flow, the information for indicating the first QoS flow comprising: a QoS Flow Identifier (QFI) of the first QoS flow, and/or flow description information of the first QoS flow.

9. The method of claim 7 or 8, wherein if the first request comprises information for indicating the first PDU session, the information for indicating the first PDU session comprises an identifier of the first PDU session.

10. The method of any one of claims 1-9, wherein if the target terminal device is the first terminal device, the first request is used to request migration of a first QoS flow from the first terminal device to the second terminal device.

11. The method of any one of claims 1-6, wherein if the target device is the second terminal device, the first request comprises resolution information of the second terminal device.

12. The method of claim 11, wherein the resolution information of the second terminal device is used to determine a QoS parameter of a second QoS flow.

13. The method of any one of claims 1-6 and 11, wherein if the target terminal device is the second terminal device, the first request is carried in a PDU session establishment request, and the PDU session request is used to request establishment of a PDU session for the target service; or
the first request is carried in a PDU session modification request, and the PDU session request is used to request modification of a PDU session for transmitting the target service.

14. The method of any one of claims 1-13, wherein a first PDU session of the first terminal device is the same as a second PDU session of the second terminal device; or
a QoS parameter of a first QoS flow of the first terminal device is the same as a QoS parameter of a second QoS flow of the second terminal device; or
QoS configuration of the first QoS flow of the first terminal device is the same as QoS configuration of the second QoS flow of the second terminal device.

15. The method of claim 14, wherein if the first PDU session is the same as the second PDU session, a network device accessed by the first terminal device is the same as a network device accessed by the second terminal device.

16. The method of claim 15, wherein address information of the first terminal device is the same as address information of the second terminal device; or
the address information of the first terminal device is different from the address information of the second terminal device.

17. The method of any one of claims 1-16, wherein a user of the first terminal device is the same as a user of the second terminal device, and a QoS parameter of the target service is associated with the user.

18. The method of any one of claims 1-17, wherein the QoS flow for transmitting the target service is part or all of QoS flows in an associated PDU session.

19. A method for wireless communication, comprising:
receiving, by network device, a first request sent by a target terminal device, the first request being used to request migration of a target service from a first terminal device to a second terminal device,
wherein the target terminal device is the first terminal device or the second terminal device.

20. The method of claim 19, wherein the first request comprises one or more of:
information for indicating the first terminal device;
information for indicating the second terminal device;
information for determining a second Protocol Data Unit (PDU) session; and
information for indicating an association relationship between the first terminal device and the second terminal device.

21. The method of claim 20, wherein if the first request comprises the information for indicating the first terminal device, the information for indicating the first terminal device comprises an identifier of the first terminal device and/or address information of the first terminal device.

22. The method of claim 20 or 21, wherein if the first request comprises the information for indicating the second terminal device, the information for indicating the second terminal device comprises an identifier of the second terminal device and/or address information of the second terminal device.

23. The method of any one of claims 20-22, wherein if the first request comprises the information for indicating the association relationship, the information for indicating the association relationship comprises one or more of:
indication information of a terminal group in which the first terminal device and the second terminal device are located;
indication information of a user to which the first terminal device and the second terminal device belong; and
identification information of the association relationship between the first terminal device and the second terminal device.

24. The method of any one of claims 20-23, wherein if the first request comprises the information for indicating the second PDU session, the information for indicating the second PDU session comprises application service description information of the target service and/or an identifier of the second PDU session.

25. The method of any one of claims 19-24, wherein if the target device is the first terminal device, the first request comprises one or more of:
information for indicating a first PDU session;
information of a first Quality of Service (QoS) flow; and
a QoS parameter of a QoS flow for transmitting the target service.

26. The method of claim 25, wherein the first request comprises the information for indicating the first QoS flow, the information for indicating the first QoS flow comprising: a QoS Flow Identifier (QFI) of the first QoS flow, and/or flow description information of the first QoS flow.

27. The method of claim 25 or 26, wherein if the first request comprises information for indicating the first PDU session, the information for indicating the first PDU session comprises an identifier of the first PDU session.

28. The method of any one of claims 19-27, wherein if the target terminal device is the first terminal device, the first request is used to request migration of a first QoS flow from the first terminal device to the second terminal device.

29. The method of any one of claims 19-24, wherein if the target device is the second terminal device, the first request comprises resolution information of the second terminal device.

30. The method of claim 29, wherein the resolution information of the second terminal device is used to determine a QoS parameter of a second QoS flow for transmitting the target service by the second terminal device.

31. The method of any one of claims 19-30, wherein if the network device is a second core network device, the method further comprises:
configuring, by the second core network device, a QoS parameter for a second QoS flow of the second terminal device.

32. The method of claim 31, further comprising:
acquiring, by the second core network device, subscription information, the subscription information recording a QoS parameter of a QoS flow for transmitting the target service,
wherein configuring, by the second core network device, the QoS parameter for the second QoS flow of the second terminal device comprises:
configuring, by the second core network device, the QoS parameter for the second QoS flow based on the subscription information.

33. The method of claim 32, wherein the subscription information is subscription information associated with a target user, a QoS parameter carried by the subscription information is associated with the target user, and the target user is a common user of the first terminal device and the second terminal device; or
the subscription information is subscription information of the second terminal device, and the QoS parameter carried by the subscription information is associated with the second terminal device.

34. The method of claim 31, wherein if the first request carries a QoS parameter of a QoS flow for transmitting the target service, configuring, by the second core network device, the QoS parameter for the second QoS flow of the second terminal device comprises:
configuring, by the second core network device, the QoS parameter for the second QoS flow based on the first request.

35. The method of claim 31, wherein configuring, by the second core network device, the QoS parameter for the second QoS flow of the second terminal device comprises:
acquiring, by the second core network device, a first QoS parameter, the first QoS parameter being a QoS parameter used by the first terminal device to transmit the target service; and
configuring, by the second core network device, the QoS parameter for the second QoS flow of the second terminal device based on the first QoS parameter.

36. The method of claim 31, wherein if the first request comprises information for indicating the first terminal device and information for indicating the second terminal device, the method further comprises:
determining, by the second core network device based on the information for indicating the first terminal device, a first QoS flow in the first terminal device for transmitting the target service; and
determining, by the second core network device, a QoS parameter of the first QoS flow,
wherein configuring, by the second core network device, the QoS parameter for the second QoS flow of the second terminal device comprises:
configuring, by the second core network device, the QoS parameter for the second QoS flow based on the QoS parameter of the first QoS flow.

37. The method of claim 31, wherein if the first request comprises information for indicating an association relationship between the first terminal device and the second terminal device, the method further comprises:
determining, by the second core network device based on the association relationship, a QoS parameter corresponding to the association relationship,
wherein configuring, by the second core network device, the QoS parameter for the second QoS flow of the second terminal device comprises:
configuring, by the second core network device, the QoS parameter for the second QoS flow of the second terminal device based on the QoS parameter corresponding to the association relationship.

38. The method of claim 31, wherein if the first request comprises resolution information of the second terminal device, the method further comprises:
determining, by the second core network device, a QoS parameter corresponding to the resolution information of the second terminal device based on the resolution information of the second terminal device and pre-stored correspondence relationships between resolution information and QoS parameters,
wherein configuring, by the second core network device, the QoS parameter for the second QoS flow of the second terminal device comprises:
configuring, by the second core network device, the QoS parameter for the second QoS flow of the second terminal device based on the QoS parameter corresponding to the resolution information of the second terminal device.

39. The method of any one of claims 19-38, further comprising:
allocating, by the second core network device, address information to the second PDU session.

40. The method of any one of claims 19-38, further comprising:
sending, by the second core network device, a second request to a fourth core network device, the second request being used to request transmission of a Policy and Charging Control (PCC) rule of the target service; and
receiving, by the second core network device, a response message for the second request sent by the fourth core network device, the response message carrying the PCC rule.

41. The method of claim 40, wherein the second request carries information for indicating the second terminal device and/or address information of the second PDU session.

42. The method of any one of claims 19-41, further comprising:
configuring, by the second core network device for a third core network device, an N4 rule corresponding to a second QoS flow and/or a QoS rule corresponding to the second QoS flow.

43. The method of claim 42, wherein the N4 rule corresponding to the second QoS flow and/or the QoS rule corresponding to the second QoS flow is carried in a PDU session modification request, the PDU session modification request being used to request modification of the PDU session for transmitting the target service.

44. The method of claim 43, wherein the N4 rule corresponding to the second QoS flow comprises one or more of: a packet detection rule, a forwarding action rule, a QoS enforcement rule, and a usage reporting rule.

45. The method of any one of claims 19-44, further comprising:
sending, by the second core network device, QoS configuration of the second QoS flow and/or alternative QoS configuration of the second QoS flow to an access network device, the access network device serving the second terminal device.

46. The method of any one of claims 19-45, further comprising:
configuring, by the second core network device, a QoS rule of a second QoS flow for a second terminal device.

47. The method of any one of claims 19-30, wherein a first PDU session of the first terminal device is the same as a second PDU session of the second terminal device; or
a QoS parameter of a first QoS flow of the first terminal device is the same as a QoS parameter of a second QoS flow of the second terminal device; or
QoS configuration of the first QoS flow of the first terminal device is the same as QoS configuration of the second QoS flow of the second terminal device.

48. The method of claim 47, wherein if the first PDU session is the same as the second PDU session, an access network device of the first terminal device is the same as an access network device of the second terminal device.

49. The method of claim 48, wherein if the network device is the access network device, the method further comprises:
acquiring, by the access network device, information for indicating an association relationship between the first terminal device and the second terminal;
determining, by the access network device based on the information for indicating the association relationship, QoS configuration associated with the information for indicating the association relationship; and
configuring, by the access network device, the second QoS flow of the second terminal device based on the QoS configuration associated with the information for indicating the association relationship.

50. The method of claim 48, wherein if the network device is a second core network device, the method further comprises:
in response to receiving the first request, allocating, by the second core network device, address information to the second terminal device, wherein the address information of the second terminal device satisfies one of the following:
the address information of the second terminal device is the same as the address information of the first terminal device;
the address information of the second terminal device is different from the address information of the first terminal device; and
the address information of the second terminal device belongs to a target address information segment, wherein the target address information segment is associated with a target user, the target user being a common user of the first terminal device and the second terminal device.

51. The method of any one of claims 19-24 and 29, wherein if the target terminal device is the second terminal device, the first request is carried in a PDU session establishment request, and the PDU session request is used to request establishment of a PDU session for the target service; or
the first request is carried in a PDU session modification request, and the PDU session request is used to request modification of a PDU session for transmitting the target service.

52. The method of any one of claims 19-30, wherein if the network device is a first core network device, the method further comprises:
receiving, by the first core network device through an access network device, the first request sent by the target terminal device.

53. The method of claim 52, further comprising:
sending, by the first core network device, the first request to a second core network device.

54. The method of any one of claims 19-48, wherein the target terminal device is the first terminal device and the network device is a second core network device, the method further comprises:
in response to receiving the first request, determining, by the second core network device, the second terminal device.

55. The method of claim 54, wherein if the first request carries information for indicating an association relationship between the first terminal device and the second terminal device, determining, by the second core network device, the second terminal device comprises:
determining, by the second core network device based on the association relationship, a terminal device having the association relationship with the first terminal device as the second terminal device.

56. The method of claim 54, wherein if the first request carries information for indicating the second terminal device, determining, by the second core network device, the second terminal device comprises:
determining, by the second core network device, the second terminal device based on the information for indicating the second terminal device.

57. The method of any one of claims 19-48, wherein if the first request comprises information for determining a second PDU session, the method further comprises:
determining, by the second core network, the second PDU session based on the first request.

58. The method of any one of claims 19-57, wherein the QoS flow for transmitting the target service is part or all of QoS flows in an associated PDU session.

59. A method for wireless communication, comprising:
sending, by a fifth core network device, target information to a sixth core network device, the target information being used to indicate a Quality of Service (QoS) parameter associated with a user, and the user being associated with one or more terminal devices.

60. The method of any one of claims 1-59, wherein third information is carried in a third request, wherein the third request is used to request creation of an Application Function (AF) session with QoS; or, the third request is used to request updating of the AF session with QoS.

61. The method of any one of claims 19-60, wherein the QoS parameter associated with the user is used when a target service of the user is migrated between a plurality of terminal devices associated with the user.

62. A method for wireless communication, comprising:
receiving, by a sixth core network device, target information sent by a fifth core network device, the target information being used to indicate a Quality of Service (QoS) parameter associated with a user, and the user being associated with one or more terminal devices.

63. The method of claim 62, wherein third information is carried in a third request, wherein the third request is used to request creation of an Application Function (AF) session with QoS; or, the third request is used to request updating of the AF session with QoS.

64. The method of claim 63, further comprising:
in response to receiving the third request, associating, by the sixth core network device, a transaction reference identifier of the AF session with a user identifier of the user; and
sending, by the sixth core network device, a response message for the third request to the fifth core network device, the response message carrying the transaction reference identifier of the AF session and the user identifier of the user.

65. The method of claim 63 or 64, further comprising:
sending, by the sixth core network device to a fourth core network device, a fourth request for requesting a Policy and Charging Control (PCC) rule, the fourth request carrying the user identity of the user and the QoS parameter.

66. A terminal device that is a target terminal device, wherein the target terminal device comprises:
a sending unit, configured to send a first request to a network device, the first request being used to request migration of a target service from a first terminal device to a second terminal device,
wherein the target terminal device is the first terminal device or the second terminal device.

67. The terminal device of claim 66, wherein the first request comprises one or more of:
information for indicating the first terminal device;
information for indicating the second terminal device;
information for determining a second Protocol Data Unit (PDU) session; or
information for indicating an association relationship between the first terminal device and the second terminal device.

68. The terminal device of claim 67, wherein if the first request comprises the information for indicating the first terminal device, the information for indicating the first terminal device comprises an identifier of the first terminal device and/or address information of the first terminal device.

69. The terminal device of claim 67 or 68, wherein if the first request comprises the information for indicating the second terminal device, the information for indicating the second terminal device comprises an identifier of the second terminal device and/or address information of the second terminal device.

70. The terminal device of any one of claims 67-69, wherein if the first request comprises the information for indicating the association relationship, the information for indicating the association relationship comprises one or more of:
identification information of a terminal group in which the first terminal device and the second terminal device are located;
identification information of a user to which the first terminal device and the second terminal device belong; and
identification information of the association relationship between the first terminal device and the second terminal device.

71. The terminal device of any one of claims 67-70, wherein if the first request comprises the information for indicating the second PDU session, the information for indicating the second PDU session comprises application service description information of the target service and/or an identifier of the second PDU session.

72. The terminal device of any one of claims 66-71, wherein if the target device is the first terminal device, the first request comprises one or more of:
information for indicating a first PDU session;
information for indicating a first Quality of Service (QoS) flow; and
a QoS parameter of a QoS flow for transmitting the target service.

73. The terminal device of claim 72, wherein the first request comprises the information for indicating the first QoS flow, the information for indicating the first QoS flow comprising: a QoS Flow Identifier (QFI) of the first QoS flow, and/or flow description information of the first QoS flow.

74. The terminal device of claim 72 or 73, wherein if the first request comprises information for indicating the first PDU session, the information for indicating the first PDU session comprises an identifier of the first PDU session.

75. The terminal device of any one of claims 66-74, wherein if the target terminal device is the first terminal device, the first request is used to request migration of a first QoS flow from the first terminal device to the second terminal device.

76. The terminal device of any one of claims 66-71, wherein if the target device is the second terminal device, the first request comprises resolution information of the second terminal device.

77. The terminal device of claim 76, wherein the resolution information of the second terminal device is used to determine a QoS parameter of a second QoS flow of the second terminal device.

78. The terminal device of any one of claims 66-71 and 76, wherein if the target terminal device is the second terminal device, the first request is carried in a PDU session establishment request, and the PDU session request is used to request establishment of a PDU session for the target service; or
the first request is carried in a PDU session modification request, and the PDU session request is used to request modification of a PDU session for transmitting the target service.

79. The terminal device of any one of claims 66-78, wherein the PDU session used by the first terminal device to transmit the target service is the same as the PDU session used by the second terminal device to transmit the target service, or
a QoS parameter of a first QoS flow of the first terminal device is the same as a QoS parameter of a second QoS flow of the second terminal device; or
QoS configuration of the first QoS flow of the first terminal device is the same as QoS configuration of the second QoS flow of the second terminal device.

80. The terminal device of claim 79, wherein if the first PDU session is the same as the second PDU session, a network device accessed by the first terminal device is the same as a network device accessed by the second terminal device.

81. The terminal device of claim 80, wherein address information of the first terminal device is the same as address information of the second terminal device; or
the address information of the first terminal device is different from the address information of the second terminal device.

82. The terminal device of any one of claims 66-81, wherein a user of the first terminal device is the same as a user of the second terminal device, and a QoS parameter of the target service is associated with the user.

83. The terminal device of any one of claims 66-82, wherein the QoS flow for transmitting the target service is part or all of QoS flows in an associated PDU session.

84. A network device, comprising:
a receiving unit, configured to receive a first request sent by a target terminal device, the first request being used to request migration of a target service from a first terminal device to a second terminal device,
wherein the target terminal device is the first terminal device or the second terminal device.

85. The network device of claim 84, wherein the first request comprises one or more of:
information for indicating the first terminal device;
information for indicating the second terminal device;
information for determining a second Protocol Data Unit (PDU) session; and
information for indicating an association relationship between the first terminal device and the second terminal device.

86. The network device of claim 85, wherein if the first request comprises the information for indicating the first terminal device, the information for indicating the first terminal device comprises an identifier of the first terminal device and/or address information of the first terminal device.

87. The network device of claim 85 or 86, wherein if the first request comprises the information for indicating the second terminal device, the information for indicating the second terminal device comprises an identifier of the second terminal device and/or address information of the second terminal device.

88. The network device of any one of claims 85-87, wherein if the first request comprises the information for indicating the association relationship, the information for indicating the association relationship comprises one or more of:
indication information of a terminal group in which the first terminal device and the second terminal device are located;
indication information of a user to which the first terminal device and the second terminal device belong; and
identification information of the association relationship between the first terminal device and the second terminal device.

89. The network device of any one of claims 85-88, wherein if the first request comprises the information for indicating the second PDU session, the information for indicating the second PDU session comprises application service description information of the target service and/or an identifier of the second PDU session.

90. The network device of any one of claims 84-89, wherein if the target device is the first terminal device, the first request comprises one or more of:
information for indicating a first PDU session;
information for indicating a first QoS flow; and
a QoS parameter of a QoS flow for transmitting the target service.

91. The network device of claim 90, wherein the first request comprises the information for indicating the first QoS flow, the information for indicating the first QoS flow comprising: a QoS Flow Identifier (QFI) of the first QoS flow, and/or flow description information of the first QoS flow.

92. The network device of claim 90 or 91, wherein if the first request comprises information for indicating the first PDU session, the information for indicating the first PDU session comprises an identifier of the first PDU session.

93. The network device of any one of claims 84-92, wherein if the target terminal device is the first terminal device, the first request is used to request migration of a first QoS flow from the first terminal device to the second terminal device.

94. The network device of any one of claims 84-89, wherein if the target device is the second terminal device, the first request comprises resolution information of the second terminal device.

95. The network of claim 94, wherein the resolution information of the second terminal device is used to determine a QoS parameter of a second QoS flow.

96. The network device of any one of claims 84-95, wherein if the network device is a second core network device, the network device further comprises:
a first processing unit, configured to configure a QoS parameter for a second QoS flow of the second terminal device.

97. The network device of claim 96, further comprising:
a first acquiring unit, configured to acquire subscription information, the subscription information recording a QoS parameter of a QoS flow for transmitting the target service,
wherein the first processing unit is configured to configure the QoS parameter for the second QoS flow based on the subscription information.

98. The network device of claim 97, wherein the subscription information is subscription information associated with a target user, a QoS parameter carried by the subscription information is associated with the target user, and the target user is a common user of the first terminal device and the second terminal device; or
the subscription information is subscription information of the second terminal device, and the QoS parameter carried by the subscription information is associated with the second terminal device.

99. The network device of claim 96, wherein if the first request carries a QoS parameter of a QoS flow for transmitting the target service, the first processing unit is configured to configure the QoS parameter for the second QoS flow based on the first request.

100. The network device of claim 96, wherein the first processing unit is configured to:
acquire a first QoS parameter, the first QoS parameter being a QoS parameter of a first QoS flow used by the first terminal device to transmit the target service; and
configure the QoS parameter for the second QoS flow of the second terminal device based on the first QoS parameter.

101. The network device of claim 96, wherein if the first request comprises information for indicating the first terminal device and information for indicating the second terminal device, the network device further comprises:
a second processing device, configured to determine, based on the information for indicating the first terminal device, a first QoS flow in the first terminal device for transmitting the target service, anda QoS parameter of the first QoS flow,
wherein the first processing unit is configured to configure the QoS parameter for the second QoS flow based on the QoS parameter of the first QoS flow.

102. The network device of claim 96, wherein if the first request comprises information for indicating an association relationship between the first terminal device and the second terminal device, the network device further comprises:
a third processing unit, configured to determine, based on the association relationship, a QoS parameter corresponding to the association relationship,
wherein the first processing unit is configured to configure the QoS parameter for the second QoS flow of the second terminal device based on the QoS parameter corresponding to the association relationship.

103. The network device of claim 96, wherein if the first request comprises resolution information of the second terminal device, the network device further comprises:
a fourth processing unit, configured to determine a QoS parameter corresponding to the resolution information of the second terminal device based on the resolution information of the second terminal device and pre-stored correspondence relationships between resolution information and QoS parameters,
wherein the first processing unit is configured to configure the QoS parameter for the second QoS flow of the second terminal device based on the QoS parameter corresponding to the resolution information of the second terminal device.

104. The network device of any one of claims 84-103, further comprising:
a fifth processing unit, configured to allocate address information to the second PDU session.

105. The network device of any one of claims 84-103, further comprising:
a first sending unit, configured to send a second request to a fourth core network device, the second request being used to request transmission of a Policy and Charging Control (PCC) rule of the target service,
wherein the receiving unit is configured to receive a response message for the second request sent by the fourth core network device, the response message carrying the PCC rule.

106. The network device of claim 105, wherein the second request carries information for indicating the second terminal device and/or address information of the second PDU session.

107. The network device of any one of claims 84-106, further comprising:
a sixth processing unit, configured to configure, for a third core network device, an N4 rule corresponding to a second QoS flow and/or a QoS rule corresponding to the second QoS flow, the second QoS flow being used by the second terminal device to transmit the target service.

108. The network device of claim 107, wherein the N4 rule corresponding to the second QoS flow and/or the QoS rule corresponding to the second QoS flow is carried in a PDU session modification request, the PDU session modification request being used to request modification of the PDU session for transmitting the target service.

109. The network device of claim 108, wherein the N4 rule corresponding to the second QoS flow comprises one or more of: a packet detection rule, a forwarding action rule, a QoS enforcement rule, and a usage reporting rule.

110. The network device of any one of claims 84-109, further comprising:
a second sending unit, configured to send QoS configuration of the second QoS flow and/or alternative QoS configuration of the second QoS flow to an access network device, the access network device serving the second terminal device.

111. The network device of any one of claims 84-110, further comprising:
a seventh processing unit, configured to configure a QoS rule of a second QoS flow for a second terminal device.

112. The network device of any one of claims 84-104, wherein a first PDU session of the first terminal device is the same as a second PDU session of the second terminal device; or
a QoS parameter of a first QoS flow of the first terminal device is the same as a QoS parameter of a second QoS flow of the second terminal device; or
QoS configuration of the first QoS flow of the first terminal device is the same as QoS configuration of the second QoS flow of the second terminal device.

113. The network device of claim 112, wherein if the first PDU session is the same as the second PDU session, an access network device of the first terminal device is the same as an access network device of the second terminal device.

114. The network device of claim 113, wherein if the network device is the access network device, the network device further comprises:
a second acquiring unit, configured to acquire information for indicating an association relationship between the first terminal device and the second terminal; and
an eighth processing unit, configured to determine, based on the information for indicating the association relationship, QoS configuration associated with the information for indicating the association relationship, and
configure the second QoS flow of the second terminal device based on the QoS configuration associated with the information for indicating the association relationship.

115. The network device of claim 113, wherein if the network device is a second core network device, the network device comprises:
a ninth processing unit, configured to, in response to receiving the first request, allocate address information to the second terminal device, wherein the address information of the second terminal device satisfies one of the following:
the address information of the second terminal device is the same as the address information of the first terminal device;
the address information of the second terminal device is different from the address information of the first terminal device; and
the address information of the second terminal device belongs to a target address information segment, wherein the target address information segment is associated with a target user, the target user being a common user of the first terminal device and the second terminal device.

116. The network device of any one of claims 84-89 and 94, wherein if the target terminal device is the second terminal device, the first request is carried in a PDU session establishment request, and the PDU session request is used to request establishment of a PDU session for the target service; or
the first request is carried in a PDU session modification request, and the PDU session request is used to request modification of a PDU session for transmitting the target service.

117. The network device of any one of claims 84-95, wherein if the network device is a first core network device, the network device further comprises:
a second sending unit, configured to receive, through an access network device, the first request sent by the target terminal device.

118. The network device of claim 117, further comprising:
a third sending unit, configured to send the first request to a second core network device.

119. The network device of any one of claims 84-113, wherein the target terminal device is the first terminal device and the network device is a second core network device, the network device further comprises:
a tenth processing unit, configured to, in response to receiving the first request, determine the second terminal device.

120. The network device of claim 119, wherein if the first request carries information for indicating an association relationship between the first terminal device and the second terminal device, the tenth processing unit is configured to determine, based on the association relationship, a terminal device having the association relationship with the first terminal device as the second terminal device.

121. The network device of claim 119, wherein if the first request carries information for indicating the second terminal device, the tenth processing unit is configured to determine the second terminal device based on the information for indicating the second terminal device.

122. The network device of any one of claims 84-113, wherein if the first request comprises information for determining the second PDU session, the network device further comprises:
an eleventh processing unit, configured to determine the second PDU session based on the first request.

123. The network device of any one of claims 84-122, wherein the QoS flow for transmitting the target service is part or all of QoS flows in an associated PDU session.

124. A network device that is a fifth core network device, wherein the network device comprises:
a sending unit, configured to send target information to a sixth core network device, the target information being used to indicate a Quality of Service (QoS) parameter associated with a user, and the user being associated with one or more terminal devices.

125. The network device of claim 124, wherein third information is carried in a third request, wherein the third request is used to request creation of an Application Function (AF) session with QoS; or, the third request is used to request updating of the AF session with QoS.

126. The network device of claim 124 or 125, wherein the QoS parameter associated with the user is used when a target service of the user is migrated between a plurality of terminal devices associated with the user.

127. A network device that is a sixth core network device, wherein the network device comprises:
a receiving unit, configured to receive target information sent by a fifth core network device, the target information being used to indicate a Quality of Service (QoS) parameter associated with a user, and the user being associated with one or more terminal devices.

128. The network device of claim 127, wherein third information is carried in a third request, wherein the third request is used to request creation of an Application Function (AF) session with QoS; or, the third request is used to request updating of the AF session with QoS.

129. The network device of claim 128, further comprising:
a first processing unit, configured to, in response to receiving the third request, associate a transaction reference identifier of the AF session with a user identifier of the user; and
a first sending unit, configured to send a response message for the third request to the fifth core network device, the response message carrying the transaction reference identifier of the AF session and the user identifier of the user.

130. The network device of claim 128 or 129, further comprising:
a second sending unit, configured to send to a fourth core network device, a fourth request for requesting a Policy and Charging Control (PCC) rule, the fourth request carrying the user identity of the user and the QoS parameter.

131. A terminal device, comprising a transceiver, a memory configured to store a program, and a processor configured to invoke the program in the memory and control the transceiver to receive or transmit signals to cause the terminal device to perform the method of any one of claims 1 to 18.

132. A network device, comprising a transceiver, a memory configured to store a program, and a processor configured to invoke the program in the memory and control the transceiver to receive or transmit signals to cause the network device to perform the method of any one of claims 19 to 65.

133. An apparatus, comprising a processor configured to invoke a program from a memory to cause the apparatus to perform the method of any one of claims 1-65.

134. A chip, comprising a processor configured to invoke a program from a memory to cause a device on which the chip is mounted to perform the method of any one of claims 1-65.

135. A computer-readable storage medium having stored thereon a program that causes a computer to perform the method of any one of claims 1-65.

136. A computer program product, comprising a program that causes a computer to perform the method of any one of claims 1-65.

137. A computer program that causes a computer to perform the method of any one of claims 1-65.
